# EUROPÄISCHE PATENTSCHRIFT

(11) **EP 3 050 910 B1**
(45) Veröffentlichungstag und Bekanntmachung des Hinweises auf die Patenterteilung: **07.12.2016**
(21) Anmeldenummer: 15152777.7
(22) Anmeldetag: 28.01.2015
(51) Int. Cl.: C08G 65/22, C08G 65/332

(54) **MODIFIZIERTE ALKOXYLIERUNGSPRODUKTE, DIE ZUMINDEST EINE NICHT-TERMINALE ALKOXYSILYLGRUPPE AUFWEISEN, MIT ERHÖHTER LAGERSTABILITÄT UND VERBESSERTER DEHNUNG UND DER UNTER DEREN VERWENDUNG HERGESTELLTEN POLYMERE**
MODIFIED ALKOXYLATION PRODUCTS COMPRISING AT LEAST ONE NON-TERMINAL ALKOXYSILYL GROUP WITH INCREASED STORAGE STABILITY AND IMPROVED ELASTICITY AND POLYMERS PRODUCED AS A RESULT OF THEIR USE
PRODUIT D'ALCOXYLATION MODIFIÉ COMPORTANT AU MOINS UN GROUPE ALCOXYSILANE NON TERMINAL, DOTÉ D'UNE STABILITÉ AU STOCKAGE ACCRUE ET D'UNE DILATATION AMÉLIORÉE DU POLYMÈRE FABRIQUÉ EN UTILISANT CELUI-CI

(43) Veröffentlichungstag der Anmeldung: 03.08.2016
(73) Patentinhaber: Evonik Degussa GmbH, 45128 Essen (DE)
(72) Erfinder: Lobert, Matthias, 45309 Essen (DE); Lewin, Anke, 40215 Düsseldorf (DE); Knott, Wilfried, 45355 Essen (DE); Schubert, Frank, 47506 Neukirchen-Vluyn (DE); Ferenz, Michael, 45147 Essen (DE); Hahn, Heike, 44879 Bochum (DE); Wojtasik, Dirk, 44579 Castrop-Rauxel (DE); Eilitz, Carina, 45475 Mülheim (DE)

(56) Entgegenhaltungen:
- EP-A1- 2 194 086
- US-A- 3 388 079
- DATABASE WPI Week 200915 Thomson Scientific, London, GB; AN 2009-B35572 XP002741759, & KR 100 828 084 B1 (DPI HOLDINGS CO LTD) 8. Mai 2008 (2008-05-08)

## Beschreibung

Gegenstand der vorliegenden Erfindung sind spezielle Alkoxylierungsprodukte, ein Verfahren zu deren Herstellung, Zusammensetzungen, die diese Alkoxylierungsprodukte enthalten sowie deren Verwendung, insbesondere als alkoxysilylgruppenhaltige Kleb- und Dichtstoffe.

In einer Vielzahl von Arbeitsvorgängen und Fertigungsprozessen spielt die Verwendung von Klebstoffen und Klebdichtstoffen, welche zusätzlich eine abdichtende Funktion erfüllen, eine zunehmend wichtige Rolle. Diese Verfahren bieten gegenüber anderen Fügeverfahren, wie beispielsweise dem Schweißen oder Nieten, Vorteile hinsichtlich Gewicht und Kosten, aber auch Vorteile bei der Spannungsübertragung zwischen den Fügeteilen.

Gegenüber dem Fügen von unterschiedlichen Materialien hat Kleben zudem den Vorteil, dass es, insbesondere bei der Verwendung von elastischen Klebstoffen, das unterschiedliche Verformungsverhalten und Differenzen in thermischen Ausdehnungskoeffizienten der Materialien ausgleichen kann und so das Fügen solcher Materialkombinationen erst ermöglicht.

Es finden sich in der Literatur verschiedene Beispiele für elastische Klebstoffe. Insbesondere haben in den letzten Jahren Klebstoffe auf Basis sogenannter silanmodifizierter Polymere aufgrund ihrer universellen Einsetzbarkeit eine breite Anwendung gefunden. Viele Beispiele in der Literatur befassen sich mit der Formulierung von Kleb-, Klebdichtstoff und Dichtstoffsystemen für eine Vielzahl von Anwendungen. Hier seien nur beispielhaft die Schriften WO 2006/136211 A1, EP 1036807 B1 und WO 2010/004038 A1 genannt, in denen die grundlegenden Konzepte der nach dem Stand der Technik üblichen Formulierungsbestandteile und Formulierungstechniken dargestellt sind. Üblicherweise handelt es sich bei dem verwendeten Basispolymer um einen Polyether, welcher in unterschiedlichen Verfahren mit feuchtigkeitsvernetzenden terminalen Alkoxysilangruppen versehen wurde. Zu dieser Produktgruppe gehören sowohl die von der Firma Kaneka unter dem Namen MS Polymer^{®} vertriebenen silylierten Polyether, als auch die sogenannten silylierten Polyurethane (SPUR Produkte, beispielsweise Desmoseal^{®} S, Bayer Materials Science).
Die Verwendung von Polyether-Backbones in diesen Produkten ist vor allem aufgrund ihrer geringen Glastemperatur und den somit auch bei niedrigen Temperaturen gewährleisteten elastischen Verformungscharakteristiken von Vorteil. Allerdings haben insbesondere die silylierten Polyether, wie in den Schriften JP 09012863, JP 09012861 und JP 07062222 beschrieben, aufgrund ihrer bei Einsatzbedingungen schwachen intermolekularen Wechselwirkung und der damit verbundenen reduzierten intermolekularen Übertragung von Kräften, nicht das optimale Profil für den Einsatz in Kleb- oder Dichtstoffen.

Silylierte Polyurethane, wie in DE 69831518 (WO 98/47939 A1) beschrieben, sind hier eindeutig im Vorteil, da die Urethanfunktionen und die je nach Produkt ebenfalls vorhandenen Harnstoff-Funktionen eine starke intermolekulare Kraftübertragung und somit hohe Festigkeiten der Verklebungen ermöglichen. Allerdings sind auch silylierte Polyurethane mit den Polyurethanassoziierten Problemen, wie beispielsweise die fehlende Temperatur- und Vergilbungsbeständigkeit, sowie die für einige Anwendungen nicht ausreichende UV-Stabilität, behaftet.

Alkoxylierungsprodukte können gemäß Stand der Technik nach EP 2093244 (US 2010/0041910) durch die Reaktion eines OH-Gruppe(n) tragenden Starters mit Propylenoxid und einer oder mehrerer Epoxidgruppen enthaltenden Alkoxysilylverbindung(en) und, je nach Ausführungsform einem oder mehreren Comonomeren durch Doppelmetallcyanidkatalysatoren (DMC-Katalysatoren), hergestellt werden. Die Schrift EP 2 093 244, und deren Offenbarung insbesondere in Bezug auf die dort beschriebenen Strukturen, wird hiermit vollumfänglich als Teil dieser Beschreibung eingebracht.

Die dort erstmals beschriebenen Alkoxylierungsprodukte zeichnen sich dadurch aus, dass sie im Gegensatz zum bis dahin bekannten Stand der Technik die Alkoxysilylgruppen entlang der Polyetherkette blockartig oder statistisch verteilt tragen und nicht nur an den Termini der Kette lokalisiert sind. Weiterhin zeichnen sich diese Verbindungen durch eine reaktionsbedingt endständige OH-Gruppe(n) aus. Aus dem Vorhandensein der OH-Gruppe(n) und den hydrolyseempfindlichen Alkoxysilylgruppen in einem Molekül rührt die intrinsische Reaktivität der Verbindungen und leichte Vernetzbarkeit unter Bildung dreidimensionaler polymerer Netzwerke her. Allerdings haben Versuche auch gezeigt, dass die Reaktivität der OH-Gruppe gegebenenfalls zu hoch liegt, um eine für die Anforderungen, die an 1-Komponentige Kleb- und Dichtstoffformulierungen gestellt werden, ausreichende Lagerstabilität zu erreichen. Unter Lagerstabilität wird in diesem Kontext die Stabilität gegen Vernetzung bzw. Vergelung der fertigen, Katalysator enthaltenden, Formulierung bei Lagerung in einer marktüblichen Dickwandkartusche verstanden.

Die daraus hergestellten Formulierungen weisen eine ungenügende Lagerstabilität auf. Sie vernetzen bereits bei leicht erhöhter Temperatur (bis 60°C) innerhalb weniger Tage bei Anwesenheit der typischerweise in feuchtigkeitshärtenden Formulierungen verwendeten Metall- und/oder Aminkatalysatoren.

Auch wenn Restfeuchte in der Formulierung die Vernetzung zu begünstigen scheint, konnte gezeigt werden, dass auch unter sehr trockenen Bedingungen ein Anvernetzen der Formulierung innerhalb weniger Tage im Schnelllagertest abläuft.

Es hat auch nicht an Anstrengungen gefehlt die intrinsische Reaktivität der terminalen OH-Gruppe(n) der besagten Alkoxylierungsprodukte durch chemische Umsetzung zu minimieren. In den in den Patentanmeldungen EP 2415796 (US 2012/028022) und EP 2415797 (US 2012/029090) beschriebenen Nachbehandlungsverfahren, sowie der noch unveröffentlichten Anmeldeschrift DE 10 2012 203737, werden Umsetzungsprodukte der nach EP 2 093 244 hergestellten Alkoxylierungsprodukte mit Isocyanaten beschrieben, im Wesentlichen die Umsetzung von a,w-dihydroxyfunktionellen Alkoxylierungsprodukten mit Diisocyanaten wie Isophorondiisocyanat.

In der Tat führt diese chemische Umsetzung nachweislich zu lagerstabilen Produkten. Die so erhaltene Lagerstabilität hat jedoch einen weiteren Effekt, nämlich einen deutlichen Anstieg der Viskosität, welcher verfahrenstechnisch begründet ist und im Folgenden näher ausgeführt wird.

Bei einer Umsetzung der terminalen α,ω-OH-Gruppen der Alkoxylierungsprodukte mit 1 mol Düsocyanat pro mol OH reagiert formell eine Isocyanat-Gruppe des Diisocyanats mit einer OH-Gruppe und die zweite Isocyanatgruppe verbleibt unreagiert im Reaktionsgemisch bis eine weitere OH-Gruppe bevorzugt in Form einer mono-hydroxy-funktionellen Komponente zur NCO-Abreaktion bereitgestellt wird. Die Reaktion einer Diol-Komponente mit zwei Molen Düsocyanat ist jedoch nicht 100%ig selektiv, so erhält man, wie dem Fachmann bekannt, als Nebenprodukte auch immer Reaktionsprodukte wo beispielsweise mehrere Diole über ein oder mehrere Diisocyanate verknüpft sind. Die Bildung derartiger Nebenprodukte kann durch viele Faktoren wie beispielsweise die Stöchiometrien der einzelnen Reaktionspartner, Art und Menge des Katalysators, Temperaturführung, usw. beeinflusst, jedoch nicht gänzlich vermieden werden.
Bei den im Stand der Technik verwendeten alkoxysilylfunktionellen Polymeren handelt es sich im Wesentlichen um hochmolekulare Polymere. Alle diskutierten Produkte basieren auf hochmolekularen Polyetherstrukturen von größer 4 000 g/mol und zeichnen sich somit auch durch eine erhöhte Viskosität aus. Werden nun noch zwei (oder mehr) dieser hochmolekularen Polyether, wie im vorherigen Abschnitt beschrieben über ein Düsocyanat verknüpft, so geht dies mit einer signifikanten Erhöhung der Viskosität einher, auch wenn nur wenige mol-% der Polyetherketten derartig verknüpft werden. Damit werden Produkte erhalten, die eine verhältnismäßig hohe Viskosität aufweisen. Allerdings ist eine hohe Viskosität der Produkte nicht immer erwünscht und kann im Einzelfall die weitere Formulierung der jeweiligen Produkte sogar erschweren.

Daher hat es nicht an Versuchen gefehlt, der hohen Viskosität, insbesondere der silylierten Polyether, durch Formulierungstricks entgegenzuwirken. So ist vor allem der Zusatz von Weichmachern zu dem silylierten Basispolymer eine weit verbreitete Möglichkeit niedrigviskosere und leichter verarbeitbare alkoxysilyl-funktionelle Polymere zu generieren. Weiterhin kann das Eigenschaftsprofil durch den Einsatz von Reaktivverdünnern modifiziert werden, wie in WO 2011/000843 A2 (US 2012/108730 A1) beschrieben.

Dieser Lösungsansatz ist jedoch nur bedingt akzeptiert, da dem Formulierer, welcher das Basispolymer formuliert, durch die zwingende Zugabe bestimmter Komponenten, die die Viskosität der Formulierung beeinflussen sollen, ein wichtiger Freiheitsgrad, nämlich die freie Formulierung nach seinen Wünschen zu modifizieren, genommen wird.

Es besteht also ein Bedarf an alkoxysilylmodifizierten Polymeren, die die zuvor beschriebenen Vorteile dieser Produktklasse uneingeschränkt beibehalten, aber gleichzeitig eine ausreichende Lagerstabilität und eine geringe Viskosität aufweisen und somit vorteilhafter verarbeitbar sind.

Aufgabe der vorliegenden Erfindung war es somit, Zusammensetzungen enthaltend alkoxysilylmodifizierte Polymere mit abgesenkter Reaktivität der terminalen OH-Gruppe(n) bereitzustellen, welche auch ohne Zuhilfenahme von weiteren Stoffen, wie beispielsweise Weichmachern oder Reaktivverdünnern, niedrigere, gut zu verarbeitende Viskositäten aufweisen, als vergleichbare bekannte Zusammensetzungen mit alkoxysilyl-modifizierten Polymeren und gleichzeitig eine hohe Lagerstabilität aufweisen. Weitere Aufgabe der vorliegenden Erfindung war es, ein einfaches Verfahren zur Herstellung solcher Zusammensetzungen bereitzustellen, sowie die Bereitstellung von härtbaren Zusammensetzungen mit hoher Lagerstabilität basierend auf derartigen Basispolymeren.

Es wurde nun gefunden, dass die Aufgabe durch die Einführung von Acetoacetatgruppen am Kettenende des Polymers gelöst wird. Gegenstand der vorliegenden Erfindung sind daher Alkoxylierungsprodukte, enthaltend mindestens eine nicht terminale Alkoxysilylgruppe, aus Monomeren von mindestens einem Alkylenoxid und mindestens einem Alkoxysilylgruppen tragenden Epoxid wobei mindestens 30 % aller freien OH-Gruppen am Kettenende des Alkoxylierungsprodukts, entsprechend R¹ und R¹⁷ der Formel (I), zu Acetoacetatgruppen umgesetzt sind. In einer bevorzugten Ausführungsform sind mindestens 40%, bevorzugt mindestens 45%, besonders bevorzugt mindestens 50% und insbesondere bevorzugt mindestens 60% aller freien OH-Gruppen am Kettenende der Alkoxylierungsprodukte zu Acetoacetatgruppen umgesetzt. Die erfindungsgemäßen Alkoxylierungsprodukte weisen sich insbesondere durch ihre verringerte Viskosität im Vergleich zu bekannten lagerstabilen Alkoxylierungsprodukten, enthaltend mindestens eine nicht terminale Alkoxysilylgruppe, aus. Bevorzugte Alkoxylierungsprodukte weisen daher eine Viskosität von 25 Pa · s, bevorzugt · 15 Pa · s, insbesondere bevorzugt ≤ 10 Pa · s auf.
Bevorzugt erfolgt die Einführung der Acetoacetatgruppen in Form einer Endverkappung der Hydroxylgruppe(n) am Kettenende des Präpolymers, hergestellt nach dem in EP 2 093 244 offengelegten Verfahren, mit einem monofunktionellen Reaktanden. Diese so modifizierten Strukturen können alleine oder in Abmischung mit nicht modifizierten Strukturen vorliegen oder zusammen mit weiteren, andersartigen härtbaren Verbindungen verwendet werden.

Überraschenderweise konnte gezeigt werden, dass durch eine chemische Umsetzung der α,ω-Hydroxylgruppen im Sinne einer Um- bzw. Veresterung die Reaktivität der OH-Gruppen dergestalt reduziert werden kann, dass die Produkte bei einer gewünscht niedrigen Viskosität eine ausreichende Lagerstabilität aufweisen. Im Vergleich zu Produkten, bei denen keine chemische Umsetzung der α,ω-Hydroxylgruppen erfolgt, können mit den erfindungsgemäßen Produkten höhere Dehnungswerte sowie höhere Festigkeiten erzielt werden (siehe auch Beispiele). Im Vergleich zu Produkten, bei denen eine anderweitige Umsetzung der α,ω-Hydroxylgruppen erfolgt, kann überraschenderweise der Effekt beobachtet werden, dass trotz Um- bzw. Veresterung die Viskosität des Produktes weitestgehend unverändert bleibt.

Unter Alkoxylierungsprodukten mit niedriger, gut zu verarbeitender Viskosität werden im Rahmen dieser Patentanmeldung solche alkoxysilyl-modifizierten Alkoxylierungsprodukte verstanden, welche eine Viskosität von ≤ 25 Pa · s, bevorzugt ≤ 15 Pa · s, insbesondere bevorzugt ≤ 10 Pa · s aufweisen und deren niedrige, gut zu verarbeitende Viskosität nicht auf dem Zusatz einer oder mehrerer Hilfskomponenten zu den Polymer-Zusammensetzungen (nach deren Herstellung) beruht, sondern deren niedrige, gut zu verarbeitende Viskosität allein durch die Eigenschaften der erfindungsgemäßen Alkoxylierungsprodukte und der nach dem erfindungsgemäßen Verfahren hergestellten Alkoxylierungsprodukte hervorgerufen wird. Soweit nicht explizit anders angegeben, wird die Viskosität Scherraten-abhängig bei einer Scherrate von 10 s⁻¹ und bei einer Temperatur von 25°C mit dem Rheometer MCR301 von Anton Paar in einer Platte-Platte-Anordnung mit einer Spaltbreite von 1 mm bestimmt. Der Durchmesser der oberen Platte betrug 40 mm.

Die niedrige, gut zu verarbeitende Viskosität hat insbesondere den Vorteil, dass den erfindungsgemäßen Polymeren zum Erhalt einer guten Fließfähigkeit keine weiteren viskositätsreduzierenden Hilfskomponenten zugeführt werden müssen, was Kosten reduziert, die Handhabung des Polymers deutlich vereinfacht und zudem eine freiere Formulierbarkeit der erfindungsgemäßen Polymere ermöglicht. Darüber hinaus erleichtert die bessere Fließfähigkeit das Herstellungsverfahren in besonders hohem Maße, da auch hier ohne die Notwendigkeit von viskositätsreduzierenden Hilfskomponenten Kosten gesenkt und ein Zugabeschritt von viskositätsreduzierenden Hilfskomponenten eingespart werden kann.

Gegenstand der vorliegenden Erfindung ist zudem ein Verfahren zur Herstellung von lagerstabilen Alkyoxylierungsprodukten mit niedriger, gut zu verarbeitender Viskosität wie nachfolgend beschrieben.

Ein weiterer Gegenstand der vorliegenden Erfindung sind lagerstabile Zusammensetzungen mit niedriger, gut zu verarbeitender Viskosität enthaltend Alkyoxylierungsprodukte hergestellt nach dem erfindungsgemäßen Verfahren.

Ebenfalls Gegenstand der vorliegenden Erfindung sind Zusammensetzungen mit niedriger, gut zu verarbeitender Viskosität enthaltend lagerstabile Alkyoxylierungsprodukte und weitere Komponenten sowie deren Verwendung, insbesondere die Verwendung dieser lagerstabilen Alkoxylierungsprodukte mit niedriger, gut zu verarbeitender Viskosität in härtbaren Zusammensetzungen.

Die erfindungsgemäßen Alkoxylierungsprodukte, das Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben, um das Zahlenmittel. Werden nachfolgend Stoffeigenschaften, wie z. B. Viskositäten oder ähnliches angegeben, so handelt es sich, wenn nicht anders angegeben, um die Stoffeigenschaften gemessen bei 25 °C.

Im Rahmen der vorliegenden Erfindung umfasst der Begriff Alkoxylierungsprodukte oder Polyether sowohl Polyether, Polyetherole, Polyetheralkohole, Polyetheresterole aber auch Polyethercarbonatole, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die verschiedenen Fragmente in der nachfolgenden Formel (I) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinanderfolgen können. Die Formel (I) beschreibt Polymere, die eine Molekulargewichtsverteilung aufweisen. Daher stellen die Indizes das numerische Mittel über alle Monomereinheiten dar.

Die in den Formeln verwendeten Indexzahlen a, b, c, d, e, f, g, h, i, w und y sowie die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Im Sinne dieser Erfindung werden Alkoxylierungsprodukte, bevorzugt der Formel (I), durch die Umsetzung von OH-funktionellen Startern mit Alkylenoxiden und anschließende Umwandlung der terminalen OH-Gruppen in Ester der Acetoacetate erhalten. Bevorzugt handelt es sich bei den Alkyoxylierungsprodukten mit niedriger, gut zu verarbeitender Viskosität um solche, in denen die Alkoxylierungsprodukte, bevorzugt der Formel (I), aufgebaut sind aus Alkylenoxid, bevorzugt mindestens Ethylenoxid und/oder Propylenoxid, mindestens einem Alkoxysilylgruppen tragenden Epoxid und gegebenenfalls weiteren Monomeren und anschließender Umsetzung mit Acetoacetatestern oder Diketen.

Bevorzugte Alkoxylierungsprodukte der Formel (I) sind aufgebaut aus folgenden Monomerenanteilen 10 bis 97 Gew.-%, bevorzugt 20 bis 95 Gew.-%, insbesondere bevorzugt 30 bis 90 Gew.-% Propylenoxid, 0 bis 60 Gew.-%, bevorzugt 3 bis 40 Gew.-%, insbesondere bevorzugt 5 bis 30 Gew.-% Ethylenoxid, 0 bis 25 Gew.-%, bevorzugt 0,5 bis 15 Gew.-%, insbesondere bevorzugt 1 bis 10 Gew.-% Alkoxysilylgruppen tragendes Epoxid und 0 bis 25 Gew.-%, bevorzugt 0,1 bis 20 Gew.-%, insbesondere bevorzugt 0 bis 10 Gew.-% weitere Monomere, bevorzugt ausgewählt aus von Propylenoxid und Ethylenoxid verschiedenen Alkylenoxiden, wie Butylenoxid, Isobutylenoxid, Styroloxid und/oder weiteren Comonomeren wie e-Caprolacton, Phthalsäureanhydrid, Glycidylethern wie tert-Butylphenylglycidylether, C₁₂/C₁₄-Fettalkoholglycidylether und 2-Ethylhexylglycidylether alle Gew.-% bezogen auf das Gesamtgewicht der Alkoxylierungsprodukte gemäß Formel (I).

Die erfindungsgemäßen lagerstabilen Alkoxylierungsprodukte mit niedriger, gut zu verarbeitender Viskosität entsprechen vorzugsweise der in Formel (I) dargestellten Struktur 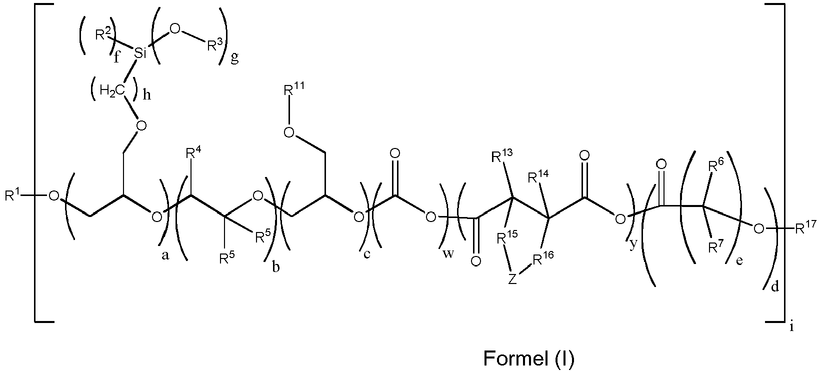 wobei
a = 0 bis 100, bevorzugt 1 bis 50, weiter bevorzugt größer 1 bis 10, insbesondere bevorzugt 1 bis 5, bevorzugt 1, 2 oder 3
b = 0 bis 1000, bevorzugt 1 bis 500, weiter bevorzugt größer 1 bis 400, insbesondere bevorzugt 10 bis 300
c = 0 bis 200, bevorzugt 1 bis 100, weiter bevorzugt größer 1 bis 80, insbesondere bevorzugt 0 bis 50
d = 0 bis 200, bevorzugt 1 bis 100, weiter bevorzugt größer 1 bis 80, insbesondere bevorzugt 0 bis 50
w = 0 bis 200, bevorzugt 1 bis 100, weiter bevorzugt größer 1 bis 80, insbesondere bevorzugt 0 bis 50
y = 0 bis 500, bevorzugt 1 bis 300, besonders bevorzugt 2 bis 200 und insbesondere bevorzugt 0 bis 100 ist,
e = 1 bis 10,
f = 0 bis 2
g = 1 bis 3
mit der Maßgabe, dass g + f = 3
h = 0 bis 10, bevorzugt 1 bis 6, insbesondere bevorzugt 1, 2 oder 3
i = 1 bis 10, bevorzugt 1 bis 5, insbesondere bevorzugt 1, 2 oder 3
mit der Maßgabe, dass die Gruppen mit den Indices a, b, c, d, w und y frei permutierbar über die Molekülkette sind, wobei die Gruppen mit den Indices w und y jeweils nicht auf sich selbst oder auf die jeweils andere Gruppe folgen dürfen und
mit der Maßgabe, dass die verschiedenen Monomereinheiten sowohl der Fragmente mit den Indices a, b, c, d, w und y als auch der gegebenenfalls vorhandenen Polyoxyalkylenkette des Substituenten R¹ untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices w und y jeweils nicht auf sich selbst oder auf die jeweils andere Gruppe folgen dürfen,
und wobei
   - R¹: = unabhängig voneinander R¹⁷ oder ein gesättigter oder ungesättigter, linearer oder verzweigter organischer Kohlenwasserstoffrest ist, der als Heteroatome 0, S und / oder N enthalten kann, bevorzugt enthält der Kohlenwasserstoffrest 1 bis 400 Kohlenstoffatome, bevorzugt 2, 3 oder 4 bis 200 Kohlenstoffatome,
   - R²: = unabhängig voneinander eine Alkylgruppe mit 1 bis 8 Kohlenstoffatomen, insbesondere Methyl- oder Ethyl-, Propyl-, Isopropyl-,
   - R³: = unabhängig voneinander eine Alkylgruppe mit 1 bis 8 Kohlenstoffatomen, insbesondere Methyl-, Ethyl-, Propyl-, Isopropyl-,
   - R⁴: = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-,
   - R⁵: = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff, oder R⁴ und einer der Reste R⁵ können gemeinsam einen Ring bilden, der die Atome, an die R⁴ und R⁵ gebunden sind, einschließt, bevorzugt enthält dieser Ring 5 bis 8 Kohlenstoffatome,
   - R⁶ und R⁷: = unabhängig voneinander ein Wasserstoffradikal, eine Alkylgruppe mit 1 bis 20 Kohlenstoffatomen, eine Aryl- oder Alkarylgruppe und/oder eine Alkoxygruppe, bevorzugt eine Methylgruppe,
   - R¹¹: = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls substituiert ist, bevorzugt handelt es sich um eine Alkylgruppe mit 1 bis 16 Kohlenstoffatomen, besonders bevorzugt mit 6 bis 12 Kohlenstoffatomen, deren Kette durch Sauerstoff unterbrochen sein kann und weiter funktionelle Gruppen tragen kann wie z.B. Carboxylgruppen gegebenenfalls mit Alkoholen wie z.B. Methanol, Ethanol, Propanol, Butanol oder Hexanol verestert, Hydroxygruppen gegebenenfalls mit Säuren wie Essigsäure, Buttersäure, Neodecansäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 30, bevorzugt 7 bis 20 Kohlenstoffatomen, bevorzugt ausgewählt aus Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl- Triphenylmethyl-, C(O)-(CH₂)₅-C-(CH₃)₃- (Rest der Neodecansäure), C₁₂/C₁₄-Alkyl-, Phenyl-, Kresyl-, tert-Butylphenyl- oder Benzylgruppe, besonders bevorzugt eine 2-Ethylhexyl-, C(O)-(CH₂)₅-C-(CH₃)₃- (Rest der Neodecansäure), C₁₂/C₁₄-Alkyl-, Phenyl-, Kresyl-, tert-Butylphenylgruppe, ganz besonders bevorzugt eine tert-Butylphenyl- oder 2-Ethylhexylgruppe,
   - R¹³, R¹⁴: = unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R¹³ und/oder R¹⁴ auch nicht vorhanden sein, wobei wenn R¹³ und R¹⁴ nicht vorhanden sind, statt der Reste R¹³ und R¹⁴ eine C=C Doppelbindung vorhanden ist, das überbrückende Fragment Z kann vorhanden oder nicht vorhanden sein, ist das überbrückende Fragment Z nicht vorhanden so sind,
   - R¹⁵ und R¹⁶: = unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R¹³ oder R¹⁴ nicht vorhanden ist, der jeweilige geminale Rest (also R¹⁵ wenn R¹³ nicht vorhanden ist und R¹⁶ wenn R¹⁴ nicht vorhanden ist) ein Alkylidenrest, bevorzugt Methyliden (=CH₂), ist, ist das überbrückende Fragment Z vorhanden, so sind
   - R¹⁵ und R¹⁶: = Kohlenwasserstoffreste , die cycloaliphatisch oder aromatisch über das Fragment Z verbrückt sind, wobei Z einen divalenten Alkylen- oder Alkenylenrest darstellt, der weiter substituiert sein kann,
   das Fragment mit dem Index y kann beispielsweise durch den Einbau cyclischer Anhydride erhalten werden, bevorzugte cyclische Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid und Trimellitanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol, besonders bevorzugte Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäureanhydrid,
   - R¹⁷: = unabhängig voneinander Wasserstoff oder ein Rest der Formel (II) 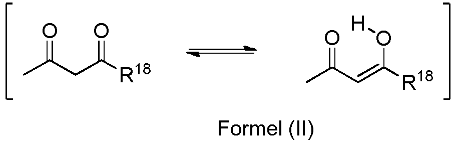
   mit
   - R¹⁸: = unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, bevorzugt Methyl-, Ethyl-, Phenyl-, besonders bevorzugt Methyl- oder Ethyl- ist,
   und mit der Maßgabe, dass mindestens 30% der Reste R¹⁷ Formel (II) entsprechen. Bevorzugt entsprechen mindestens 40% der Reste R¹⁷ Formel (II), weiter bevorzugt mindestens 45%, besonders bevorzugt mindestens 50% und insbesondere bevorzugt mindestens 60%. Die prozentualen Anteile beziehen sich selbstverständlich hier auf die Gesamtmenge aller Reste R¹⁷.

Bevorzugt sind erfindungsgemäße lagerstabile Alkoxylierungsprodukte mit niedriger, gut zu verarbeitender Viskosität gemäß Formel (I) in denen jeweils die Indices i und a unabhängig voneinander 1, 2, 3 oder 4 und b ≥ 3 betragen.

Besonders bevorzugt sind Alkoxylierungsprodukte mit niedriger, gut zu verarbeitender Viskosität gemäß Formel (I) mit i = 2 , a = 2-4 und b > 20 die aus Propylenoxid (PO) und 3-Glycidyloxypropyltriethoxysilan (GLYEO) und optional weiterhin Ethylenoxid (EO) hergestellt wurden. Insbesondere bevorzugt sind Alkoxylierungsprodukte mit niedriger, gut zu verarbeitender Viskosität gemäß Formel (I) mit i = 2, die aus Propylenoxid (PO) und 3-Glycidyloxypropyltriethoxysilan (GLYEO) und optional weiterhin Ethylenoxid (EO) hergestellt wurden.

In einer ganz besonders bevorzugten Ausführungsform handelt es sich um erfindungsgemäße Alkoxylierungsprodukte der Formel (I) mit
a = 0 bis 50, bevorzugt 2 bis 20, weiter bevorzugt 1 bis 4,
b = 10 bis 500, weiter bevorzugt 12 bis 400
c = 0 bis 20, bevorzugt 0 bis 4
d = 0 bis 20, bevorzugt 0
w = 0 bis 20, bevorzugt 0
y = 0 bis 20, bevorzugt 0,
e = 1 bis 10,
f = 0 bis 2
g = 1 bis 3
mit der Maßgabe, dass g + f = 3
h = 1, 2 oder 3
i = 1,2 oder 3 und
   - R¹: = unabhängig voneinander R¹⁷ oder ein gesättigter oder ungesättigter, linearer oder verzweigter organischer Kohlenwasserstoffrest ist, der als Heteroatome O, S und / oder N enthalten kann, bevorzugt enthält der Kohlenwasserstoffrest 1 bis 400 Kohlenstoffatome, bevorzugt 2, 3 oder 4 bis 200 Kohlenstoffatome, besonders bevorzugt ist R¹ R17 oder ein Alkylrest mit 2 bis 12, bevorzugt mit 3 bis 6 Kohlenstoffatomen, besonders bevorzugt ein Butylrest,
   - R²: = unabhängig voneinander eine Methyl- oder Ethyl-, Propyl-, oder Isopropylgruppe, bevorzugt eine Methyl- oder Ethylgruppe
   - R³: = unabhängig voneinander eine Methyl- oder Ethyl-, Propyl-, oder Isopropylgruppe, bevorzugt eine Methyl- oder Ethylgruppe

   - R⁴: = unabhängig voneinander Wasserstoff oder eine Methyl-, Ethyl-, Octyl-, Decyl-, Dodecyl-, Phenyl- oder Benzylgruppe, besonders bevorzugt Wasserstoff oder eine Methyl- oder Ethylgruppe,
   - R⁵: = unabhängig voneinander Wasserstoff, Methyl- oder Ethyl-, insbesondere bevorzugt Wasserstoff,
   - R¹¹: = unabhängig voneinander eine gegebenenfalls substituierte Alkylkette mit 4 bis 20 Kohlenstoffatomen, bevorzugt mit 5 bis 16 Kohlenstoffatomen, besonders bevorzugt mit 6 bis 12 Kohlenstoffatomen ist, bevorzugt ausgewählt aus Methyl-, Ethyl-, Propyl-, Butyl-, iso-Butyl-, tert-Butyl-, Octyl-, 2-Ethylhexyl-, 2-Propylheptyl-, Triphenylmethyl-, C(O)-(CH₂)₅-(CH₃)₃- (Rest der Neodecansäure), C₁₂/C₁₄-Alkyl-, Phenyl-, Kresyl-, tert-Butylphenyl- oder Benzylgruppe, besonders bevorzugt eine 2-Ethylhexyl-, C(O)-(CH₂)₅-C-(CH₃)₃- (Rest der Neodecansäure), C₁₂/C₁₄-Alkyl-, Phenyl-, Kresyl-, tert-Butylphenylgruppe, ganz besonders bevorzugt eine tert-Butylphenyl- oder 2-Ethylhexylgruppe,
   - R¹⁷: = unabhängig voneinander Wasserstoff oder ein Rest der Formel (II) 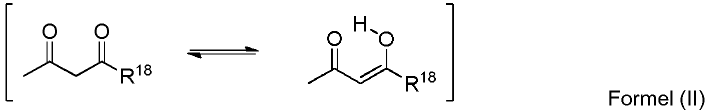 mit
   R¹⁸ = Methyl-, Ethyl-, oder Phenyl-,
   und mit der Maßgabe, dass der prozentuale Anteil (R¹⁷ = H) < (R¹⁷ = Formel (II)) ist.

In der EP 2 093 244 wird beschrieben, dass man Epoxidfunktionen tragende Alkoxysilane in vorteilhafter Weise in Gegenwart bekannter Doppelmetallcyanidkatalysatoren selektiv alkoxylieren kann. Mit dem dort offenbarten Verfahren erschließt sich die Möglichkeit, in reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Die Offenbarung der EP 2 093 244 ist vollumfänglich als Teil und Bestandteil dieser Beschreibung anzusehen.

Einsetzbare Alkylenoxidverbindungen, die zu den in Formel (I) angegebenen Fragmenten mit dem Index b führen, sind z.B. Ethylenoxid, 1,2-Epoxypropan (Propylenoxid), 1,2-Epoxy-2-methylpropan (Isobutylenoxid), Epichlorhydrin, 2,3-Epoxy-1-propanol, 1,2-Epoxybutan (Butylenoxid), 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl) -1,2-epoxypropan, 3-(Perfluorohexyl)-1,2-epoxypropan, 4-(2,3-Epoxypropyl)morpholin, 1-(Oxiran-2-ylmethyl)pyrrolidin-2-on. Bevorzugt eingesetzt werden Ethylenoxid, Propylenoxid und Butylenoxid. Besonders bevorzugt werden Ethylenoxid und Propylenoxid eingesetzt.

Eine nicht abschließende Sammlung von Lactonen, welche durch Ringöffnung zu den in Formel (I) angegebenen Fragmenten mit dem Index d führen, sind Valerolactone oder Caprolactone zu nennen, die beide unsubstituiert oder mit Alkylgruppen, bevorzugt Methylgruppen, substituiert sein können. Vorzugsweise werden ε-Caprolacton oder δ-Valerolacton eingesetzt, insbesondere ε-Caprolacton.

Als gesättigte, ungesättigte oder aromatische cyclische Dicarbonsäureanhydride, welche durch Einreaktion zu den in Formel (I) angegebenen Fragmenten mit dem Index y führen, werden bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Phthalsäureanhydrid, Hexahydro-, Tetrahydro-, Dihydro-, Methylhexahydro- und Methyltetrahydrophthalsäureanhydrid eingesetzt. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Polyetherestern copolymerisiert werden. Auch Mischungen der genannten Anhydride sind einsetzbar. Des Weiteren ist es möglich die Anhydride dem Starter vor Reaktionsbeginn zuzusetzen und auf eine Zudosage wie zuvor beschrieben zu verzichten. Es ist aber auch möglich sowohl dem Starter Anhydride zuzusetzen und im weiteren Reaktionsverlauf noch weiteres Anhydrid während der Alkoxylierung zuzudosieren.
Besonders bevorzugt werden Bernsteinsäureanhydrid, Maleinsäureanhydrid, Phthalsäureanhydrid und Hexahydrophthalsäureanhydrid eingesetzt, insbesondere Maleinsäureanhydrid und Hexahydrophthalsäureanhydrid.

Glycidylether, welche zu den in Formeln (I) angegebenen Fragmenten mit dem Index c führen, entsprechen insbesondere der allgemeinen Formel (III) 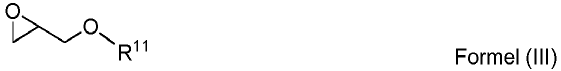 mit R¹¹ wie oben definiert.

Der Rest R¹¹ kann weitere funktionelle Gruppen tragen wie z.B. (Meth)Acrylsäure bzw. Polymerisate der (Meth)Acrylsäure. Es können also gegebenenfalls vorhandene Hydroxygruppen mit Acrylsäure oder/und Methacrylsäure verestert sein. Die Doppelbindungen der (Meth)Acrylsäure sind polymerisierbar, z.B. radikalisch z.B. UV induziert.

Die Polymerisation der (Meth)Acrylgruppen kann nach der Herstellung des Polyethers geschehen. Sie kann auch mit den erfindungsgemäßen Alkoxylierungsprodukten, mit den Produkten des erfindungsgemäßen Verfahrens, wie auch nach der erfindungsgemäßen Verwendung durchgeführt werden.

Bevorzugt entspricht R¹¹ einer Methyl-, Ethyl-, iso-Butyl-, tert-Butyl-, Hexyl-, Octyl-, 2-Ethylhexyl-, - C(O)-(CH₂)₅-C-(CH₃)₃ (Rest aus der Neodecansäure, erhältlich z.B. als Cardura E 10 P bei Momentive), C₁₂/C₁₄-, Phenyl-, Kresyl-, oder tert-Butylphenylgruppe oder/und einer Allylgruppe, besonders bevorzugt handelt es sich um eine Allyl-, Kresyl-, 2-Ethylhexyl-, -C(O)-(CH₂)₅-C-(CH₃)₃ oder C₁₂/C₁₄-Gruppe. Insbesondere bevorzugt werden 2-Ethylhexyl- (erhältlich beispielsweise als Grilonit RV 1807, Grilonit RV 1807 4.1 bzw. IPOX RD 17) und C₁₂-C₁₄-Glycidylether (erhältlich beispielsweise als Ipox® RD 24) eingesetzt.

Als Glycidylether können auch polyfunktionelle Glycidylether wie 1,4-Butandioldiglycidylether, 1,6-Hexandioldiglycidylether, Cyclohexandimethanoldi-glycidylether, Neopentylglykoldiglycidylether, Polyethylenglykoldiglycidylether, Polypropylenglykoldiglycidylether, Polyglycerin-3-Glycidether, Glycerintriglycidether, Trimethylolpropantriglycidylether oder Pentraerythrittetraglycidylether eingesetzt werden, wodurch auch verzweigte Strukturelemente in das Alkoxylierungsprodukt der Formel (I) eingebracht werden können.

Je nach verwendetem epoxidfunktionellem Alkoxysilan und evtl. eingesetzten weiteren Monomeren, können modifizierte Alkoxylierungsprodukte gemäß Formel (I) hergestellt werden, sowie beliebig aufgebaute Gemische.

Einsetzbare Alkylenoxidverbindungen, die zu den in Formel (I) angegebenen Fragmenten mit dem Index a führen, können der allgemeinen Formel (IV) 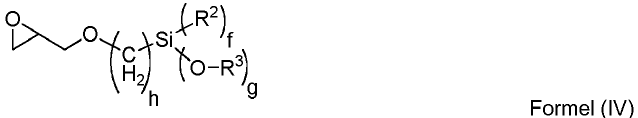 mit f, g, h, R² und R³ wie oben definiert, entsprechen.

Eine nicht abschließende Sammlung von Epoxidgruppen-substituierten Alkoxysilanen, gemäß Formel (IV) umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropylethyl-diethoxysilan.

Bevorzugt werden im erfindungsgemäßen Verfahren als Verbindungen der Formel (IV) 3-Glycidyloxypropyltrimethoxy- oder -triethoxy-silan eingesetzt, die z.B. unter den Handelsnamen DYNASYLAN^{®} GLYMO bzw. DYNASYLAN^{®} GLYEO (Warenzeichen der Evonik Degussa GmbH) erhältlich sind. Besonders bevorzugt ist der Einsatz von Glycidyloxypropyltriethoxysilan, da auf diese Weise bei der Anwendung als feuchtigkeitsvernetzende Komponenten Methanolemissionen vermieden werden können.

Unter den Verbindungen, die den Rest R¹ der Formel (I) liefern, werden im Rahmen der vorliegenden Erfindung Substanzen verstanden, welche im Schritt (1) des erfindungsgemäßen Verfahrens zunächst zu Hydroxylgruppen-terminierten Alkoxylierungsprodukten führen, welche im Folgenden im Verfahrensschritt (2) in Acetoacetatester überführt werden können. Der Rest R¹ entstammt vorzugsweise einer hydroxylgruppenhaltigen Verbindung der Formel (V)

R¹-(OH)ᵢ (V)

mit R¹ = organischer Rest, der gegebenenfalls eine oder mehrere Alkoxysilylgruppen aufweisen kann. Der Rest R¹ trägt i OH-Gruppen mit i = 1 bis 8, bevorzugt 1-4, besonders bevorzugt 1 oder 2.

Die in dem erfindungsgemäßen Verfahren eingesetzte Verbindung der Formel (V) ist vorzugsweise ausgewählt aus der Gruppe der Alkohole, Polyetherole oder Phenole. Bevorzugt wird als Startverbindung ein ein- oder mehrwertiger Polyetheralkohol oder Alkohol eingesetzt. Bevorzugt werden ein- bis vierwertige Polyetheralkohole oder Alkohole eingesetzt. Insbesondere bevorzugt werden zweiwertige Polyetheralkohole oder Alkohole eingesetzt. Vorteilhaft werden Polyetherole mit Molmassen von 50 bis 2000 g/mol, die ihrerseits zuvor durch DMC-katalysierte Alkoxylierung hergestellt wurden, verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole.

Als Starter der Formel (V) werden bevorzugt Verbindungen mit i = 1 bis 4 und mit Molmassen von 62 bis 10.000 g/mol, bevorzugt 92 bis 7000 g/mol, besonders bevorzugt 122 bis 5000 g/mol und insbesondere bevorzugt 2000 bis 4000 g/mol, eingesetzt. Die Startverbindungen können in beliebigen Mischungen miteinander oder als Reinsubstanz eingesetzt werden. Es können auch seitenständig Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden. Vorteilhaft werden niedermolekulare Polyetherole mit Molmassen von 62 bis 4000 g/mol, die ihrerseits zuvor durch DMC-katalysierte Alkoxylierung hergestellt wurden, als Starterverbindungen verwendet.

Als Starter der Formel (V) mit i = 1 werden bevorzugt unabhängig voneinander ein OH-funktioneller monovalenter linearer oder verzweigter, gesättigter oder ungesättigter Kohlenwasserstoffrest mit 1 bis 500 Kohlenstoffatomen, bevorzugt ausgewählt aus Alkyl-, Alkenyl-, Aryl- oder Alkarylresten, welcher gegebenenfalls durch Heteroatome wie O, N und / oder S unterbrochen und zudem weiter substituiert sein kann, z.B. mit Säureester-, Amid-, Alkyl-trialkoxysilan- oder Alkyl-alkyldialkoxysilan-Gruppen, wobei der Kohlenwasserstoffrest vorzugsweise von 1 bis 30, bevorzugt von 2 bis 18 und besonders bevorzugt von 3 bis 12 Kohlenstoffatome aufweist, eingesetzt. Besonders bevorzugt können Methanol, Ethanol, Propanol, Isopropanol, Butanol, iso-Butanol, tert-Butanol, 2,2,4-Trimethyl-1,3-pentandiol monoisobutyrat (Texanol von Exxon), Octanol, 2-Ethylhexanol, 2-Propylheptanol, Allylalkohol, Decanol, Dodecanol, C₁₂/C₁₄-Fettalkohol, Phenol, alle Konstitutionsisomere des Kresols, Benzylalkohol, Stearylalkohol, insbesondere um Butanol, 2,2,4-Trimethyl-1,3-pentandiol monoisobutyrat (Texanol von Exxon), Allylalkohol, 2-Ethylhexanol oder 2-Propylheptanol eingesetzt werden.
In einer besonderen Ausführungsform der Erfindung enthält der OH-funktionelle Kohlenwasserstoffrest des Starters gemäß Formel (V) mit i = 1 7 bis 100 Kohlenstoffatome, wobei die Kohlenstoffkette des Kohlenwasserstoffrestes bevorzugt durch Sauerstoffatome unterbrochen ist, bevorzugt ist der von Sauerstoffatomen unterbrochene Kohlenwasserstoffrest ein Polyoxyalkylenrest, Polyetherrest und/oder Polyetheralkoxyrest, oder auch ein Polyester-, Polycarbonat-, Polyetheresterrest oder Mischungen aus den zuvor genannten Resten.

Als Starter der Formel (V) mit i = 2 werden bevorzugt Verbindung ausgewählt aus niedermolekularen Verbindungen wie Ethylenglykol, Propylenglykol, Di-/Triethylenglykol, 1,2-Propylenglykol, Di-/Tripropylenglykol, Neopentylglykol, 1,4-Butandiol, 1,2-Hexandiol und 1,6-Hexandiol, Trimethylolpropan- oder Glycerinmonoether wie z. B. -monoallylether eingesetzt werden, sowie hochmolekularen Verbindungen wie Polyethylenoxiden, Polypropylenoxiden, Polyestern, Polycarbonaten, Polycarbonatpolyolen, Polyesterpolyolen, Polyetherestern, Polyetherolen, Polyethercarbonaten, Polyamiden, Polyurethanen und Zucker-basierten Alkoxylaten, die gegebenenfalls eine oder mehrere Alkoxysilylgruppen aufweisen können.

Bei Startern gemäß Formel (V) mit i > 2 handelt es sich bevorzugt um Verbindungen ausgewählt aus handelsüblichen Zuckeralkoholen wie Erythritol, Xylitol und insbesondere die 6-wertigen Reduktionsprodukte der Monosaccharide wie Mannitol und Sorbitol. Aber auch Verbindungen wie Trimethylolpropan, Di(trimethylol)ethan, Di(trimethylol)propan, Pentaerythrit, Di(pentaerythritol), Glycerin, Di(glycerin) oder Polyglycerin oder auch weitere auf Naturstoffen basierende, Hydroxylgruppen tragende Verbindungen, wie z. B. Cellulosezucker oder Lignin können eingesetzt werden.

Als Startverbindungen des erfindungsgemäßen Verfahrens R¹-(OH)ᵢ können bevorzugt solche Verbindungen mit i mindestens 1 und einem Schmelzpunkt von weniger als 150°C, besonders bevorzugt ist i mindestens 2 und besitzt einen Schmelzpunkt von weniger als 100°C und eine Molmasse zwischen 500 - 8000 g/mol, insbesondere bevorzugt ist i = 2 oder 3 und besitzt einen Schmelzpunkt von weniger als 90°C, sowie eine Molmasse von 500 - 4000 g/mol.
Bevorzugte Starter R¹-(OH)ᵢ sind hydroxyl-terminierte Polyether, die durch eine Reaktion von Propylenoxid, sowie Ethylenoxid, gegebenenfalls in Kombination mit Propylenoxid hergestellt wurden. Alle genannten Starter können auch in beliebigen Mischungen eingesetzt werden. Besonders bevorzugte Starter R¹-(OH)ᵢ sind hydroxylgruppenhaltige Polyester wie z. B. Desmophen® 1700 (Bayer), Polyesterpolyole, wie z. B. Stepanpol® PS-2002 (Stepan Company), Priplast 1838 (Croda) und Polycarbonate, beispielsweise Oxymer® M112 (Perstorp), Desmophen® C1200 (Bayer), Desmophen® C2200 (Bayer), sowie verschiedene dendritische OH-terminierte Polymere, wie beispielsweise Boltorn® H2004 (Perstorp). Insbesondere bevorzugte Starter sind Polypropylenglycole, Polytetrahydrofurane (erhältlich in diversen Molgewichten als Terathane® (Invista) und PolyTHF® (BASF) z.B. PolyTHF 2000)) und Polycarbonate (erhältlich in diversen Molgewichten als Desmophen® C (Bayer Material Science) z. B. C 1200 oder C 2200).

Zur Einführung des Restes R¹⁷ = Acetoacetat (üblicherweise abgekürzt als acac), d.h. als Reaktanden, bevorzugt im Verfahrensschritt (2) können vorzugsweise Acetoacetat-Derivate der allgemeinen Formel (VI) eingesetzt werden 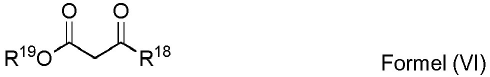
mit R¹⁸ wie oben definiert und
R¹⁹ = unabhängig voneinander ein gegebenenfalls substituierter Kohlenwasserstoffrest mit 1 bis 20 Kohlenstoffatomen, bevorzugt mit 2 bis 10 Kohlenstoffatomen, bevorzugt ausgewählt aus Methyl-, Ethyl- oder tert-Butyl-, insbesondere bevorzugt Ethyl- oder tert-Butyl-,
oder Diketene der allgemeinen Formel (VII) eingesetzt werden 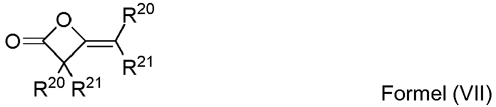 mit
   R²⁰ , R²¹ = unabhängig voneinander Wasserstoff oder ein gegebenenfalls substituierter Kohlenwasserstoffrest mit 1 bis 20 Kohlenstoffatomen, bevorzugt Methyl-, Ethyl-, Benzyl- oder Phenyl-.

In der Formel (VI) ist der Acetoacetatester in seiner Keto-Form dargestellt. In Formel (I) wurde der Rest R¹⁷ gemäß Formel (II) auch in seiner Enol-Form genauer gesagt als Keto-Enol-Tautomer dargestellt. Dem Fachmann ist bekannt, dass derartige Tautomere immer in einem Gleichgewicht vorliegen, welches abhängig ist von der Konstitution der Acetoacetat-Verbindung und der Polarität der Umgebung. Wenn im Folgenden von Verbindungen der Formel (VI) gesprochen wird, so sind die Enolformen wie in Formel (II) gezeigt immer mitumfasst ohne dass explizit darauf hingewiesen wird.

Als Verbindungen der Formel (VI) können vorteilhaft Methylacetoacetat, Ethylacetoacetat, Allylacetoacetat, Propylacetoacetat, Isopropylacetoacetat, Butylacetoacetat, Isobutylacetoacetat, tert-Butylacetoacetat, Pentylacetoacetat, Hexylacetoacetat, Heptylacetoacetat, 2-Methoxyethyl-acetoacetat, 2-(Methacryloyloxy)ethylacetoacetat, Benzylacetoacetat und Mischungen daraus eingesetzt werden.

Als Verbindungen der Formel (VII) kann vorteilhaft Diketen eingestzt werden bei der die Reste R²⁰ und R²¹ Wasserstoff entsprechen.

Die mittleren Molmassen M_{w} der Alkoxylierungsprodukte gemäß Formel (I) betragen vorzugsweise zwischen 4000 bis 50000 g/mol, bevorzugt zwischen 8000 und 20000 g/mol und besonders bevorzugt von 10000 bis 16000 g/mol. Vorzugsweise sind die Alkoxytierungsprodukte der Formel (I) bei Raumtemperatur flüssig und weisen eine Viskosität von ≤ 25 Pa · s auf.

Die Hydrophilie / Hydrophobie der erfindungsgemäßen Alkoxylierungsprodukte kann durch die Wahl geeigneter Startermoleküle und/oder geeigneter Comonomere für die Alkoxylierung eingestellt werden.
Die erfindungsgemäßen Alkoxylierungsprodukte können auf verschiedene Arten und Weisen erhalten werden. Vorzugsweise erfolgt die Herstellung der erfindungsgemäßen Alkoxylierungsprodukte nach dem nachfolgend beschriebenen erfindungsgemäßen Verfahren.

Die Alkoxylierungsprodukte der Formel (I) zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, im Sinne von in beliebiger Reihenfolge anzuordnen, mit der Einschränkung, dass cyclische Anhydride sowie Kohlendioxid statistisch insertiert, also nicht in homologen Blöcken, in der Polyetherstruktur vorliegen, sowie nicht in direkter Nachbarschaft zueinander.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für solche an sich exakt wiedergegebene Strukturformeln, wie beispielsweise für Formel (I).

Je nach verwendetem epoxidfunktionellem Alkoxysilan und evtl. eingesetzten weiteren Monomeren, sowie evtl. auch Kohlendioxid können ester- oder carbonat-modifizierte Alkoxysilylpolyether erhalten werden. Bevorzugt ist die Alkoxysilyleinheit in der Verbindung der Formel (I) eine Trialkoxysilyleinheit, insbesondere Triethoxysilyleinheit.

Wie ²⁹Si-NMR- und GPC-Untersuchungen ergeben, bedingt durch das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R³ gegen einen langkettigen modifizierten Alkoxysilylpolymerrest ausgetauscht. Bimodale wie auch multimodale GPC- Kurven belegen, dass die Alkoxylierungsprodukte neben den nicht umgeesterten Spezies, wie sie in Formel (I) wiedergegeben sind, solche mit der doppelten, zum Teil dreifachen oder gar vielfachen Molmasse enthalten. Formel (I) gibt mithin die komplexe chemische Realität nur vereinfacht wieder.

Somit stellen die Alkoxylierungsprodukte Mischungen dar, die auch Verbindungen enthalten können, in denen die Summe der Indices f + g in Formel (I) im statistischen Mittel kleiner als 3 ist, da ein Teil der R³O-Gruppen durch Silylpolyethergruppen ersetzt werden kann. Die Zusammensetzungen enthalten somit Spezies, die am Siliziumatom unter Abspaltung von R³-OH und Kondensationsreaktion mit der reaktiven OH-Gruppe eines weiteren Moleküls der Formel (I) ausgebildet werden. Diese Reaktion kann mehrfach ablaufen bis z.B. alle R³O-Gruppen am Silizium gegen weitere Moleküle der Formel (I) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.
Die angegebenen Werte und Vorzugsbereiche für die Indizes a, b, c, d, e, f, g, h, i, w und y der Verbindung der Formel (I) sind somit als Mittelwerte über die verschiedenen, einzeln nicht fassbaren Spezies zu verstehen. Die Vielfalt an chemischen Strukturen und Molmassen spiegelt sich auch in den für Alkoxylierungsprodukte der Formel (I) typischen und für konventionelle DMCbasierende Polyether völlig ungewöhnlichen breiten Molmassenverteilungen von M_{w}/Mₙ von meist ≥ 1,5 wider.

Vorzugsweise werden die erfindungsgemäßen Alkoxylierungsprodukte durch das nachfolgend beschriebene erfindungsgemäße Verfahren hergestellt.

Ein weiterer Gegenstand der vorliegenden Erfindung sind daher Verfahren zur Herstellung der vorab beschriebenen Alkoxylierungsprodukte, wobei mindestens ein Alkylenoxid mit mindestens einem Alkoxysilylgruppen tragenden Epoxid und gegebenenfalls weiteren Monomeren umgesetzt wird und das so erhaltene Produkt mit Acetoacetatestern und/oder Diketen umgesetzt wird.

Das erfindungsgemäße Verfahren zur Herstellung von Alkoxylierungsprodukten mit niedriger, gut zu verarbeitender Viskosität gemäß Formel (I) umfasst bevorzugt die Schritte
(1) Umsetzen mindestens eines Starters R¹-(OH)ᵢ bevorzugt ausgewählt aus der Gruppe der Alkohole, Polyetherole oder Phenole, mit mindestens einem Alkylenoxid und mindestens einem Alkoxysilylgruppen tragenden Epoxid, und
(2) Umsetzen des OH-terminierten Alkoxylierungsproduktes aus Schritt (1) mit mindestens einem Acetoacetat-Ester oder Diketen,
wobei es sich bei Starter um OH-funktionelle Verbindungen sowie den Alkylenoxiden und Reaktanden um die zuvor als bevorzugt definierten handelt. Bevorzugt erfolgt der Schritt (2) direkt im Anschluss der abgeschlossenen Alkoxylierung des Schrittes (1).

### Verfahrensschritt (1):

Im Verfahrensschritt (1) wird bevorzugt eine DMC-katalysierte Alkoxylierung eines Starters gemäß Formel (V) mit Epoxid-Gruppen aufweisenden Verbindungen (Alkylenoxiden und Glycidylethern) gemäß EP 2 093 244 durchgeführt. Es wird im Verfahrensschritt (1) also ein alkoxysilylfunktionelles Alkoxylierungsprodukt gemäß Formel (I) mit R¹⁷ = H erhalten, sprich an dem Kettenterminus bzw. den Kettentermini (je nach Wert von i) sind Hydroxy-Gruppen vorhanden. Diese sind hervorgegangen aus der Epoxidringöffnung des jeweils letzten Epoxidmonomers unter Anknüpfung an das OH-funktionelle Ende der wachsenden Kette.

Zum Starten der Alkoxylierungsreaktion nach erfindungsgemäßem Verfahren wird das Startgemisch, bestehend aus einem oder mehreren OH-funktionellen Starter(n) gemäß Formel (V) und dem Doppelmetallcyanid-Katalysator, der gegebenenfalls zuvor in einem Suspendiermittel aufgeschlämmt wurde, im Reaktor vorgelegt.
Als Suspensionsmittel können entweder ein Polyether oder inerte Lösungsmittel benutzt werden oder vorteilhaft auch eine oder mehrere Startverbindungen, oder alternativ ein Gemisch aus beiden Komponenten.
Der vorgelegten Startmischung wird Propylenoxid oder zumindest eine andere Epoxidverbindungen zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu den reaktiven Gruppen des Starters, insbesondere den OH-Gruppen im Startgemisch, liegt in der Startphase dabei vorzugsweise zwischen 0,1 zu 1 bis 10 zu 1, bevorzugt zwischen 0,2 zu 1 bis 5 zu 1, insbesondere zwischen 0,4 zu 1 bis 3 zu 1. Es kann vorteilhaft sein, wenn vor der Zugabe des Epoxids gegebenenfalls vorhandene, die Reaktion inhibierende Stoffe aus dem Reaktionsgemisch z.B. durch Destillation gegebenenfalls im Vakuum entfernt werden.
Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Glycidylethern/-estern oder epoxidfunktionellen Alkoxysilanen wird das Anspringen der Reaktion vorzugsweise durch die einsetzende Wärmetönung angezeigt.

Nach der Startphase, also nach Initialisierung der Reaktion, kann je nach angestrebter Molmasse weiteres Alkylenoxid zudosiert werden. Alternativ kann auch ein beliebiges Gemisch von unterschiedlichen Alkylenoxidverbindungen und Verbindungen der Formeln (III) und (IV) addiert werden, wobei diese auch separat in beliebiger Reihenfolge nacheinander addiert werden können. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan. Dies ist jedoch weniger bevorzugt.
In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁵ zu 1, insbesondere 1 bis 10⁴ zu 1.
Die Anlagerung der Alkylenoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethern einsetzbaren Lactone oder cyclischen Anhydride können sowohl bereits in der Startphase dem Gemisch aus Starter gemäß Formel (V) und Katalysator zugefügt als auch zu einem späteren Zeitpunkt parallel zur Alkylenoxiddosierung zugeführt werden. Die genannten Comonomere können auch jeweils nacheinander alternierend mit Alkylenoxiden in den Reaktor dosiert werden.
Das molare Verhältnis der Alkylenoxidmonomere zu cyclischen Anhydriden ist dabei variabel. Üblicherweise werden mindestens äquimolare Mengen Alkylenoxidmonomere bezogen auf Anhydride eingesetzt. Bevorzugt ist die Verwendung der Alkylenoxide in einem molaren Überschuss, um die vollständige Anhydridumsetzung zu gewährleisten.
Lactone können während der Alkoxylierung wahlweise im stöchiometrischen Unterschuss oder Überschuss bezogen auf die Alkylenoxidmonomere zugefügt werden.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl diskontinuierlich (batchweise) als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als Doppelmetallcyanidkatalysatoren (DMC-Katalysatoren) werden im erfindungsgemäßen Verfahren vorzugsweise die in EP 2 093 244 beschriebenen, insbesondere die dort als bevorzugt bzw. besonders bevorzugt beschriebenen DMC-Katalysatoren eingesetzt.

Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 300 wppm und ganz besonders bevorzugt bei 1 bis 200 wppm. Diese Konzentration ist dabei bezogen auf die Gesamtmasse der entstehenden Alkoxylierungsprodukte.
Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter gemäß Formel (V) als Suspensionsmittel. Bevorzugt wird aber auf eine Suspendierung verzichtet.

Es kann vorteilhaft sein, wenn der Verfahrensschritt (1) des erfindungsgemäßen Verfahrens so durchgeführt wird, dass die Alkoxylierung in zumindest drei Stufen durchgeführt wird. In diesem Fall wird in Stufe 1 der Starter mit einer kleinen Menge Propylenoxid in Gegenwart des DMC-Katalysators wie zuvor beschrieben zur Reaktion gebracht. Anschließend wird weiter Propylenoxid angelagert, wobei hierdurch bevorzugt maximal eine Molmasse von 500 bis 10 000 g/mol, besonders bevorzugt maximal 1000 bis 3 000 g/mol zusätzlich zum genutzten Starter aufgebaut wird. In Stufe 2 erfolgt die Zugabe von weiterem Propylenoxid und/oder Ethylenoxid und gegebenenfalls einem oder mehrerer der oben genannten Glycidylether der Formel (III); in Stufe 3 erfolgt die Zugabe von einer oder mehrerer der Verbindungen der Formel (IV) gegebenenfalls unter weiterer Zugabe von Propylenoxid und/oder Ethylenoxid; wobei die Stufen 2 und 3 auch zu einer Stufe zusammengefasst werden können.
Durch die Anlagerung einer Mischung aus Verbindung der Formel (IV) und Propylenoxid in Stufe 3 wird die Alkoxysilanfunktionalität statistisch über die Polymerketten/die Polymerblöcke eingebracht. Die Reihenfolge der Durchführung der Stufen 2 und 3 ist beliebig. Vorzugsweise wird nach Stufe 1 zuerst Stufe 2 durchgeführt bevor Stufe 3 durchgeführt wird. Die Stufen 2 und 3 können mehrfach nacheinander durchgeführt werden. Bei der mehrmaligen Durchführung der Stufen 2 und 3 können die eingesetzten Alkylenoxide sowie der Komponenten der Formeln (III) und (IV) gleich oder verschieden sein. Die zuvor beschriebene detaillierte Verfahrensbeschreibung dient lediglich der besseren Veranschaulichung und repräsentiert eine bevorzugte Dosagereihenfolge der Reaktionsteilnehmer. Hieraus darf kein strickt blockweiser Aufbau der erfindungsgemäßen Alkoxylierungsprodukte mit reduzierter Viskosität abgeleitet werden.
Stufe 1 wird vorzugsweise bei einer Temperatur von 70 - 160 °C, bevorzugt bei 80 - 150 °C, besonders bevorzugt bei einer Temperatur von 100 - 145°C, insbesondere bevorzugt bei 110 - 130 °C durchgeführt. Stufe 2 wird vorzugsweise bei einer Temperatur von 70 - 160 °C, bevorzugt bei 80 - 150 °C, besonders bevorzugt bei einer Temperatur von 100 - 145°C, insbesondere bevorzugt bei 110 - 130 °C durchgeführt. Stufe 3 wird vorzugsweise bei einer Temperatur von 70 - 140 °C, bevorzugt bei 75 - 120 °C, besonders bevorzugt bei einer Temperatur von 80 - 110°C durchgeführt. Werden die Stufen 2 und 3 zusammengefasst so ist die Reaktionstemperatur, der unter Stufe 3 bevorzugten Temperatur anzupassen.

Bevorzugt handelt es sich bei den Alkylenoxiden des Verfahrenschrittes (1) um Ethylenoxid und/oder Propylenoxid und mindestens ein Alkoxysilylgruppen tragendes Epoxid und/oder weiteren Monomeren. Bevorzugt werden Monomeren zu folgenden Anteilen eingesetzt 10 bis 97 Gew.-%, bevorzugt 20 bis 95 Gew.-%, insbesondere bevorzugt 30 bis 90 Gew.-% Propylenoxid, 0 bis 60 Gew.-%, bevorzugt 3 bis 40 Gew.-%, insbesondere bevorzugt 5 bis 30 Gew.-% Ethylenoxid, 0 bis 25 Gew.-%, bevorzugt 0,5 bis 15 Gew.-%, insbesondere bevorzugt 1 bis 10 Gew.-% Alkoxysilylgruppen tragendes Epoxid und 0 bis 25 Gew.-%, bevorzugt 0,1 bis 20 Gew.-%, insbesondere bevorzugt 0 bis 10 Gew.-% weitere Monomere, bevorzugt ausgewählt aus von Propylenoxid und Ethylenoxid verschiedenen Alkylenoxiden, wie Butylenoxid, Isobutylenoxid, Styroloxid und/oder weiteren Comonomeren wie e-Caprolacton, Phthalsäureanhydrid, Glycidylethern wie tert-Butylphenylglycidylether, C₁₂/C₁₄-Fettaikohoigiycidyiether und 2-Ethylhexylglycidylether bezogen auf das Gesamtgewicht der eingesetzten Monomere. Insbesondere solche Monomeren in den genannten Anteilen führen zu lagerstabilen Produkten mit besonders niedriger Viskosität. Solche Produkte sind daher gut weiter verarbeitbar.

Bevorzugt sind die erfindungsgemäßen Produkte über ein Alkoxylierungsverfahren unter Verwendung von Doppelmetallcyanidkatalysatoren (DMC-Katalysatoren) und dihydroxyfunktionellen Verbindungen als Starter gemäß Formel (V) mit i = 2 erhältlich.

Bevorzugt sind die erfindungsgemäßen Alkoxylierungsprodukte dadurch erhältlich, dass an derartige Starter mindestens ein Glycidylether der allgemeinen Formel (IV) und mindestens ein weiteres polymerisierbares Monomer, bevorzugt ausgewählt aus Alkylenoxiden, Glycidylethern, Lactonen, cyclischen Dicarbonsäureanhydriden und Mischungen daraus, insbesondere Alkylenoxide, besonders bevorzugt Monomere, die im fertigen Produkt zu Fragmenten mit dem Index b, c, d, w und/oder y, insbesondere bevorzugt Fragmenten mit dem Index b, der Formel (I) führen, angelagert werden.

### Verfahrensschritt (2):

Im Verfahrensschritt (2) erfolgt eine sogenannte Endverkappungsreaktion, bei der die OH-terminierten Alkoxylierungsprodukte aus Schritt (1) mit mindestens einem Reaktanden dergestalt umgesetzt werden, dass die Reaktivität der Hydroxylgruppen dergestalt reduziert wird, dass für die angedachten Produktanwendungen lagerstabile Produkte erhalten werden.

Um nun Alkoxylierungsprodukte gemäß Formel (I) mit R¹⁷ = Formel (II) zu erhalten sind viele Umsetzungen denkbar, welche unter anderem in "Acetic Acid and its Derivates", V. H. Agreda, J. R. Zoeller (Eds.), Marcel Dekker Inc., New York 1993, Kapitel 11, beschrieben werden. Als Reaktand kann beispielsweise Diketen (Formel (VII)) eingesetzt werden, welches sich an die terminale Hydroxyl-Gruppe des Produktes aus Verfahrensschritt (1) addieren kann. Besonders vorteilhaft bei einer derartigen Umsetzung ist, dass kein Spaltprodukt entsteht, welches ggf. in der Folgeanwendung stört und so gegebenenfalls destillativ entfernt werden muss.

Alternativ kann die Umsetzung auch durch eine Umesterung erfolgen sofern als Reaktanden Verbindungen wie beispielsweise Acetoacetatalkylester, -arylester oder -alkarylester eingesetzt werden. Derartige Acetoacetatester können denen in Formel (VI) dargestellten Verbindungen entsprechen, vorzugsweise seien Methyl-, Ethyl-, Allyl-, tert-Butyl-, Phenyl-, Benzyl-Acetoacetat genannt.
Besonders bevorzugt können aus ökonomischen und verfahrenstechnischen Gründen Ethyl- und tert-Butylacetoacetatester eingesetzt werden. Ethylacetoacetat zeichnet sich neben seiner großtechnischen Verfügbarkeit auch durch einen vorteilhaften Preis aus. tert-Butylacetoacetat hat den verfahrenstechnischen Vorteil, dass er durch den hohen sterischen Anspruch der tert-Butylgruppe eine deutlich höhere Selektivität im Sinne der Reaktionsführung hat. Da eine Veresterung stets eine Gleichgewichtsreaktion ist, wird die Spaltung der generierten Acetoacetatester durch den sterischen Anspruch des zuvor generierten Spaltalkohols tert-Butanol behindert und so eine höhere Reaktionsgeschwindigkeit gegenüber anderen Estern wie Methyl- oder Ethylacetoacetat bedingt.

Als Verbindungen der Formel (VI) und/oder der Formel (VII) können im Verfahrensschritt (2) vorteilhaft Diketen, Methylacetoacetat, Ethylacetoacetat, Allylacetoacetat, Propylacetoacetat, Isopropylacetoacetat, Butylacetoacetat, Isobutylacetoacetat, tert-Butylacetoacetat, Pentylacetoacetat, Hexylacetoacetat, Heptylacetoacetat, 2-Methoxyethyl-acetoacetat, 2-(Methacryloyloxy)-ethylacetoacetat, Benzylacetoacetat und Mischungen daraus eingesetzt werden. Besonders bevorzugt sind Diketen, Methylacetoacetat, Ethylacetoacetat, Allylacetoacetat, Isobutylacetoacetat, tert-Butylacetoacetat,Benzylacetoacetat und Mischungen daraus, insbesondere bevorzugt sind Ethylacetoacetat und/oder tert-Butylacetoacetat.

Der Rohstoff tert-Butylacetoacetat (CAS 1694-31-1) wird beispielsweise von der Firma Lonza unter der Produktbezeichnung AA-t-butyl und der Fima Eastman unter dem Namen Eastman™ t-BAA angeboten.
Der Rohstoff Ethylacetoacetat (CAS 141-97-9) wird beispielsweise von der Firma Lonza unter der Produktbezeichnung EAA und der Fima Eastman unter dem Namen Eastman™ EAA angeboten.

Der Verfahrensschritt (2) des erfindungsgemäßen Verfahrens kann vorzugsweise bei Temperaturen von 50°C bis 150°C, besonders bevorzugt bei Temperaturen von 70°C bis 120°C und insbesondere bevorzugt bei Temperaturen von 90°C und 110°C durchgeführt werden. Der Druck, bei dem der Verfahrensschritt (2) durchgeführt wird, beträgt vorzugsweise 0,02 bar bis 100 bar, besonders bevorzugt 0,05 bis 20 bar und insbesondere von 0,2 bis 1 bar absolut.
In einer besonderen Ausführungsform des erfindungsgemäßen Verfahrens kann es von Vorteil sein den Verfahrensschritt (2) bei reduziertem Druck durchzuführen und so den bei der Umesterung frei werdenden Spaltalkohol kontinuierlich destillativ zu entfernen.

Durch das Vorhandensein der feuchtigkeitsempfindlichen Alkoxysilylgruppen im Alkoxylierungsprodukt des Verfahrensschritts (1) kann es vorteilhaft sein den Verfahrensschritt (2) in Gegenwart eines Inertgases wie z. B. Stickstoff oder Argon durchzuführen.

Der Verfahrensschritt (2) des erfindungsgemäßen Verfahrens kann in Abwesenheit oder Anwesenheit eines Lösungsmittels durchgeführt werden. Als Lösungsmittel sind prinzipiell alle unter den gewählten Reaktionsbedingungen inerten Lösungsmittel einsetzbar. Es ist jedoch bevorzugt den Verfahrensschritt (2) des erfindungsgemäßen Verfahrens in Abwesenheit von Lösungsmitteln durchzuführen, um eine gegebenenfalls nötige destillative Entfernung des Lösungsmittels zu verhindern.

Der Verfahrensschritt (2) des erfindungsgemäßen Verfahrens kann in Abwesenheit oder Anwesenheit eines Katalysators durchgeführt werden. Als Katalysatoren eignen sich prinzipiell alle dem Fachmann bekannten Veresterungs- bzw. Umesterungskatalysatoren, vorteilhaft können Übergangsmetallkatalysatoren wie z. B. Organo-Sn- oder Organo-Ti-Katalysatoren eingesetzt werden.
Zur Vermeidung unerwünschter Nebenreaktionen der Alkoxysilylgruppen ist eine katalysator-freie Umsetzung im Verfahrensschritt (2) bevorzugt.

Bevorzugt werden im erfindungsgemäßen Verfahren die Reaktanden der Formeln (VI) bzw. (VII) mindestens äquimolar gegenüber den OH-Gruppen des intermediären Alkoxylierungsproduktes aus Verfahrensschritt (1) eingesetzt.
Besonders bevorzugt werden im erfindungsgemäßen Verfahren die Reaktanden der Formeln (VI) und (VII) im molaren Überschuss gegenüber den OH-Gruppen des intermediären Alkoxylierungsproduktes aus Verfahrensschritt (1) eingesetzt.

In einer weiteren besonders bevorzugten Ausführungsform des Verfahrensschritts (2) zur Herstellung der erfindungsgemäßen Alkoxylierungsprodukte der Formel (I) wird eine quantitative Umsetzung sowohl der terminalen OH-Funktionen des Polyethers, als auch der Reaktanden der Formeln (VI) und (VII) angestrebt.

Weiterhin werden in der besonders bevorzugten Ausführungsform des Verfahrensschritts (2) des erfindungsgemäßen Verfahrens die Reaktionsbedingungen so gewählt, dass in der Zusammensetzung prozentual mehr Alkoxylierungsprodukte gemäß Formel (I) mit R¹⁷ = Formel (II) enthalten sind als R¹⁷ = H .

Der Umsetzungsgrad, das heisst das Verhältnis von R¹⁷ = Formel (II) zu R¹⁷ = H des Alkoxylierungsproduktes gemäß Formel (I) kann je nach Reaktionsbedingungen und Art der Reaktanden beeinflusst werden. Es kann vorteilhaft sein, wenn der Verfahrensschritt (2) so durchgeführt wird, dass > 20 Gew.-%, bevorzugt > 50 Gew.-% und besonders bevorzugt > 75 Gew.-% der erhaltenen Alkoxylierungsprodukte der Formel (I) terminal Reste der Formel (II) tragen. Der Einsatz von 1,0 bis 1,5 Mol-Äquivalenten Acetoacetat-Ester oder Diketen, bezogen auf die Anzahl der freien OH-Gruppen des Alkoxylierungsproduktes aus Verfahrensschritt (1), in Verfahrensschritt (2) und Reaktion bei Temperaturen von 80-140°C, bevorzugt 90-120°C, für mindestens 1,5 Stunden führt beispielsweise zu Produkten, in welchen > 30 Gew.-% der erhaltenen Alkoxylierungsprodukte terminal Reste der Formel (II) tragen und der Einsatz von 1,2 bis 2 Mol-Äquivalenten Acetoacetat-Ester oder Diketen, bezogen auf die Anzahl der freien OH-Gruppen des Alkoxylierungsproduktes aus Verfahrensschritt (1), in Verfahrensschritt (2) und Reaktion bei Temperaturen von 80-140°C, bevorzugt 90-120°C, für mindestens 2,5 Stunden führt beispielsweise zu Produkten, in welcheri > 60 Gew.-% der erhaltenen Alkoxylierungsprodukte terminal Reste der Formel (II) tragen.

Die erfindungsgemäßen Alkoxylierungsprodukte können z. B. zur Herstellung von härtbaren Zusammensetzungen verwendet werden.

Erfindungsgemäße härtbare Zusammensetzungen zeichnen sich dadurch aus, dass sie eines oder mehrere der oben beschriebenen erfindungsgemäßen Alkoxylierungsprodukte der Formel (I) und zumindest einen Härtungskatalysator aufweisen.

Die erfindungsgemäßen Alkoxylierungsprodukte entsprechen bevorzugt der Formel (I) mit i = 2, a = 1 bis 4 und b = 3 bis 300 und bevorzugt c = 0, w = 0, y = 0 und d = 0. Besonders bevorzugt handelt es sich bei den Monomeren, die zu dem Baustein mit dem Index b führen um Ethylenoxid und/oder Propylenoxid. Insbesondere bevorzugt beträgt der Anteil an Propylenoxid 10 bis 99 Gew.-%, bevorzugt 20 bis 80 Gew.-%, ebenfalls bevorzugt 40 bis 60 Gew.-%, und ganz besonders bevorzugt 80 bis 99 Gew.-% und der Anteil an Ethylenoxid 0 bis 60 Gew.-%, bevorzugt 5 bis 50 Gew.-%, ebenfalls bevorzugt 10 bis 20 Gew.-%, und ganz besonders bevorzugt 0 bis 20 Gew.-%, bezogen auf die Gesamtmenge an eingesetzten Monomeren. Weiter bevorzugt handelt es sich bei den Monomeren, die zu dem Baustein mit dem Index a führen um solche, die ausschließlich Ethoxysilylgruppen, bevorzugt Triethoxysilylgruppen tragen, besonders bevorzugt um 3-Glycidyloxypropyltriethoxysilan (GLYEO). Besonders bevorzugt ist es, wenn eine Kombination der vorgenannten bevorzugten Eigenschaften des Alkoxylierungsproduktes erfolgt.

Der Anteil der erfindungsgemäßen Alkoxylierungsprodukte an erfindungsgemäßen Zusammensetzungen beträgt vorzugsweise von 10 bis 90 Gew.-%, bevorzugt von 15 bis 70 Gew.-%, und besonders bevorzugt von 20 Gew.-% bis 65 Gew.-%.

Als Härtungs-Katalysatoren (für die Vernetzung oder Polymerisation der erfindungsgemäßen Zusammensetzung oder deren chemische Fixierung auf Partikel- oder makroskopischen Oberflächen) können die üblicherweise zur Hydrolyse und Kondensation von Alkoxysilanen eingesetzten Katalysatoren eingesetzt werden. Vorzugsweise werden als Härtungs-Katalysatoren organischen Zinnverbindungen, wie z.B. Dibutylzinndilaurat, Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinndicarboxylat, Dioxtylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndiacetylacetonat und Dioctylzinndilaurat eingesetzt. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Des Weiteren können auch Wismutkatalysatoren, z.B. Borchi^{®}-Katalysatoren, Titanate, z.B. Titan(IV)isopropylat, Eisen(III)-Verbindungen, z.B. Eisen(III)-acetylacetonat, Aluminiumverbindungen, wie Aluminiumtrüsopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Der Anteil der Härtungs-Katalysatoren an der erfindungsgemäßen Zusammensetzung beträgt vorzugsweise von 0,1 Gew.-% bis 5 Gew.-%, bevorzugt von 0,15 bis 2 Gew.-% und besonders bevorzugt von 0,2 bis 0,75 Gew.-%, bezogen auf die Gesamtzusammensetzung.

Die erfindungsgemäße Zusammensetzung kann weitere Zusatzstoffe ausgewählt aus der Gruppe der Weichmacher, Füllstoffe, Lösungsmittel, Haftvermittler, Additive zur Anpassung des Fließverhaltens, sogenannten Rheologieadditiven und Trocknungsmittel, insbesondere chemische Feuchtigkeits-Trocknungsmittel enthalten.

Vorzugsweise enthält die erfindungsgemäße Zusammensetzung einen oder mehrere Haftvermittler und/oder ein oder mehrere Trocknungsmittel, insbesondere chemische Feuchtigkeits-Trocknungsmittel.

Als Haftvermittler können die aus dem Stand der Technik bekannten Haftvermittler, insbesondere Aminosilane in der erfindungsgemäßen Zusammensetzung enthalten sein. Als Haftvermittler können vorzugsweise Alkoxysilyl-Gruppen tragende Verbindungen die zusätzlich über primäre oder sekundäre Amingruppen, Vinylgruppen, Thiolgruppen, Arylgruppen oder alternativ Oxirangruppen verfügen, wie 3-Aminopropyltrimethoxysilan (Dynasylan^{®} AMMO (Evonik), N-(2-Aminoethyl)-3-aminopropyltrimethoxysilan (Dynasylan^{®} DAMO (Evonik)), N-(n-Butyl)aminopropyltrimethoxysilan (Dynasylan® 1189 (Evonik)), 3-Mercaptopropyltrimethoxysilan (Dynasylan^{®} MTMO, Evonik), 3-Glycidyloxy-propyltriethoxysilan (Dynasylan^{®} GLYEO, Evonik) 3-Glycidyloxypropyltrimethoxysilan (Dynasylan^{®} GLYMO, Evonik), Phenyltrimethoxysilan (Dynasylan^{®} 9165 oder Dynasylan^{®} 9265, Evonik) oder oligomere Amino/Alkyl-Alkoxysilane wie z.B. Dynasylan^{®} 1146 (Evonik), jeweils alleine oder in Mischung eingesetzt werden. Bevorzugte vorhandene Haftvermittler sind z. B. 3-Aminopropyltriethoxysilan (Geniosil^{®} GF 93 (Wacker), Dynasylan^{®} AMEO (Evonik^{®})) und/oder (3-Aminopropy)methyldiethoxysilan (Dynasylan^{®} 1505 (Evonik^{®})), 3-Aminopropyltrimethoxysilan (Dynasylan^{®} AMMO (Evonik), N-(2-Aminoethyl)-3-aminopropyltrimethoxysilan (Dynasylan^{®} DAMO (Evonik)), Dynasylan^{®} 1146 (Evonik), besonders bevorzugt 3-Aminopropyltriethoxysilan, 3-Aminopropyltrimethoxysilan, N-(2-Aminoethyl)-3-aminopropyltrimethoxysilan, Dynasylan^{®} 1146, und insbesondere bevorzugt sind 3-Aminopropyltrimethoxysilan, 3-Aminopropyltriethoxysilan, N-(2-Aminoethyl)-3-aminopropyltrimethoxysilan und Dynasylan^{®} 1146.Der Anteil der Haftvermittler an der erfindungsgemäßen Zusammensetzung beträgt vorzugsweise von größer 0 bis 5 Gew.-%, bevorzugt von 0,5 bis 4 Gew.-% und besonders bevorzugt von 1 bis 2,5 Gew.-% bezogen auf die Gesamtzusammensetzung.
Es kann vorteilhaft sein, wenn die erfindungsgemäße Zusammensetzung ein Trocknungsmittel aufweist, z. B. zum Binden von durch Formulierungskomponenten eingetragenen, oder nachträglich durch den Abfüllprozess oder die Lagerung eingebrachten Wassers oder Feuchtigkeit. Als Trocknungsmittel können in den erfindungsgemäßen Zusammensetzungen prinzipiell alle aus dem Stand der Technik bekannten Trocknungsmittel eingesetzt werden. Als chemische Trocknungsmittel kann z.B. Vinyltrimethoxysilan (Dynasylan^{®} VTMO , Evonik oder Geniosil^{®} XL 10, Wacker AG), Vinyltriethoxysilan (Dynasylan^{®} VTEO, Evonik oder Geniosil^{®} GF 56, Wacker), Vinyltriacetoxysilan (Geniosil^{®} GF 62, Wacker), N-Trimethoxysilylmethyl-O-methyl-carbamat (Geniosil^{®} XL 63, Wacker), N-Dimethoxy(methyl)silylmethyl-O-methyl-carbamat, N-Methyl[3-(Trimethoxysilyl)-propyl]carbamat (Geniosil^{®} GF 60, Wacker), Vinyldimethoxymethylsilan (Geniosil^{®} XL 12, Wacker), Vinyltris(2-methoxyethoxy)silan (Geniosil^{®} GF 58, Wacker) Bis(3-triethoxysilylpropyl)amin (Dynasylan^{®} 1122, Evonik), Bis(3-trimethoxysilylpropyl)amin (Dynasylan^{®} 1124), N-Dimethoxy(methyl)silylmethyl-O-methyl-carbamat (Geniosil^{®} XL 65, Wacker) oder oligomere Vinylsilane wie beispielsweise Dynasylan^{®} 6490 und Dynasylan^{®} 6498 (beide zu beziehen von Evonik) alleine oder in Mischung verwandt werden. Vorzugsweise werden Vinyltrimethoxysilan (Dynasylan^{®} VTMO , Evonik oder Geniosil^{®} XL 10, Wacker AG), Vinyltriethoxysilan (Dynasylan^{®} VTEO, Evonik oder Geniosil^{®} GF 56, Wacker) als Trocknungsmittel eingesetzt. Als chemisches Feuchtigkeits-Trocknungsmittel enthält die erfindungsgemäße Zusammensetzung bevorzugt Vinyltrimethoxysilan (Dynasylan^{®} VTMO , Evonik oder Geniosil^{®} XL 10, Wacker AG). Ferner kann zusätzlich oder alternativ zur chemischen Trocknung ein physikalisches Trocknungsmittel, wie z.B. Zeolithe, Molsiebe, wasserfreies Natriumsulfat oder wasserfreies Magnesiumsulfat verwendet werden.

Der Anteil der Trocknungsmittel an der erfindungsgemäßen Zusammensetzung beträgt vorzugsweise von größer 0 bis 5 Gew.-%, bevorzugt von 0,2 bis 3 Gew.-% bezogen auf die Gesamtzusammensetzung.

Die erfindungsgemäße Zusammensetzung kann einen oder mehrere Zusatzstoffe ausgewählt aus der Gruppe der Weichmacher, Füllstoffe, Lösungsmittel und Additive zur Anpassung des Fließverhaltens (Rheologieadditive) enthalten.

Die Weichmacher können z. B. ausgewählt werden aus der Gruppe der Phthalate, der Polyester, Alkylsulfonsäureester des Phenols, Cyclohexandicarbonsäureester oder auch der Polyether. Als Weichmacher werden nur solche Verbindungen eingesetzt, die von den erfindungsgemäßen Alkoxylierungsprodukten der Formel (I) verschieden sind.

Wenn Weichmacher in der erfindungsgemäßen Zusammensetzung vorhanden sind, beträgt der Anteil der Weichmacher an der erfindungsgemäßen Zusammensetzung vorzugsweise von größer 0 Gew.-% bis 90 Gew.-%, bevorzugt 2 Gew.-% bis 70 Gew.-%, besonders bevorzugt 5 Gew.-% bis 50 Gew.-% bezogen auf die Gesamtzusammensetzung.
Als Füllstoffe können z. B. gefällte oder gemahlene Kreide, anorganische Carbonate im allgemeinen, gefällte oder gemahlene Silikate, gefällte oder pyrogene Kieselsäuren, Glaspulvern, Glashohlkugeln (sog. Bubbles), Metalloxiden, wie z.B. TiO₂, Al₂O₃, natürliche oder gefällte Bariumsulfate verstärkende Fasern, wie Glasfasern oder Kohlefasern, lang oder kurzfaserige Wollastonite, Kork, Ruß oder Graphit eingesetzt werden. Vorteilhaft können hydrophobierte Füllstoffe eingesetzt werden, da diese Produkte einen geringeren Wassereintrag aufweisen und die Lagerstabilität der Formulierungen verbessern.

Wenn Füllstoffe in der erfindungsgemäßen Zusammensetzung vorhanden sind, beträgt der Anteil der Füllstoffe an der erfindungsgemäßen Zusammensetzung vorzugsweise von 1 bis 70 Gew.-% bezogen auf die Gesamtzusammensetzung, wobei für die hier genannten Füllstoffe mit Ausnahme der pyrogenen Kieselsäuren Konzentrationen von 30 bis 65 Gew.-% besonders bevorzugt sind. Werden pyrogene Kieselsäuren verwendet ist ein Anteil der pyrogenen Kieselsäuren von 2 bis 20 Gew.-% besonders bevorzugt.

Als Rheologieadditive, vorzugsweise zusätzlich zum Füllstoff enthalten, können aus der Gruppe der Amidwachse, zu beziehen z.B. von Cray Valley unter dem Markennamen Crayvallac^{®}, gehärtete Pflanzenöle und Fette, pyrogene Kieselsäuren, wie z.B. Aerosil^{®} R202 oder R805 (beide zu beziehen von Evonik) oder Cab-O-Sil^{®} TS 720 oder TS 620 oder TS 630 (vertrieben von Cabot) ausgewählt werden. Werden pyrogene Kieselsäuren bereits als Füllstoff verwendet, kann die Zugabe eines Rheologieadditivs entfallen.

Wenn Rheologieadditive in der erfindungsgemäßen Zusammensetzung vorhanden sind, beträgt der Anteil der Rheologieadditive an der erfindungsgemäßen Zusammensetzung je nach gewünschtem Fließverhalten vorzugsweise von größer 0 Gew.-% bis 10 Gew.-%, bevorzugt von 2 Gew.-% bis 6 Gew.-% bezogen auf die Gesamtzusammensetzung.

Die erfindungsgemäßen Zusammensetzungen können Lösungsmittel enthalten. Die Lösungsmittel können dabei beispielsweise der Erniedrigung der Viskosität der unvernetzten Mischungen dienen oder das Aufziehen auf die Oberfläche begünstigen. Als Lösungsmittel kommen prinzipiell sämtliche Lösungsmittel sowie Lösemittelmischungen in Betracht. Bevorzugte Beispiele für solche Lösungsmittel sind Ether wie z.B. t-Butyl-methylether, Ester, wie z.B. Ethylacetat oder Butylacetat oder Diethylcarbonat sowie Alkohole, wie z.B. Methanol, Ethanol sowie die verschiedenen Regioisomere des Propanols und Butanols oder auch anwendungsspezifisch ausgewählte Glykoltypen. Weiterhin können aromatische und/oder aliphatische Lösemittel wie auch halogenierte Lösemittel, wie z.B. Dichlormethan, Chloroform, Tetrachlormethan, Fluorkohlenwasserstoffe (FREON) u.a.m zum Einsatz kommen, aber auch anorganische Lösemittel wie beispielsweise Wasser, CS₂, überkritisches CO₂ u.a.m.

Bei Bedarf können die erfindungsgemäßen Zusammensetzungen außerdem eine oder mehrere Substanzen, ausgewählt aus der Gruppe umfassend Co-Vernetzer, Flammschutzmittel, Entlüfter, antimikrobielle und konservierende Stoffe, Farbstoffe, Färbemittel und Pigmente, Frostschutzmittel, Fungizide und/oder Reaktivverdünner sowie Komplexbildner, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht, enthalten.

Als UV-Stabilisatoren können z. B. bekannte Produkte auf Basis gehinderter Phenolischer Systeme eingesetzt werden. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin^{®}-Stabilisatoren (Ciba), wie z. B. Tinuvin^{®}-Stabilisatoren (Ciba), beispielsweise Tinuvin^{®} 1130, Tinuvin^{®} 292 oder auch Tinuvin^{®} 400, bevorzugt Tinuvin^{®} 1130 in Kombination mit Tinuvin^{®} 292 eingesetzt werden. Ihre Einsatzmenge richtet sich nach dem Grad der erforderlichen Stabilisierung.

Zusätzlich können den härtbaren Zusammensetzungen Covernetzer zur Steigerung von mechanischer Härte und Reduktion der Fließneigung beigemischt werden. Solche Covernetzer sind typischerweise Substanzen die in der Lage sind 3, 4 oder mehr vernetzungsfähige Gruppen zur Verfügung zu stellen. Beispiele im Kontext dieser Erfindung sind 3-Aminopropyltriethoxysilan, Tetramethoxysilan oder Tetraethoxysilan.

Bevorzugte erfindungsgemäße Zusammensetzungen weisen zumindest ein Alkoxylierungsprodukt der Formel (I) und einen Weichmacher, einen Füllstoff, einen Haftvermittler, ein Trocknungsmittel oder einen (Härtungs-)katalysator auf.

Besonders bevorzugte erfindungsgemäße Zusammensetzungen weisen von 10 bis 90 Gew.-% oder kleiner 80 Gew.-% bezogen auf die Gesamtzusammensetzung an Alkoyxlierungsprodukt der Formel (I), das vorzugsweise im Mittel zwischen 2,0 und 8,0, Ethoxysilyl-Funktionen pro Alkoyxlierungsprodukt der Formel (I) aufweist, von 0,3 Gew.-% bis 5,0 Gew.-%, bevorzugt von 0,5 Gew.-% bis 4,0 Gew.-%, und besonders bevorzugt von 1,0 Gew.-% bis 2,5 Gew.-% bezogen auf die Gesamtzusammensetzung an Haftvermittler, weniger als 30 Gew.-% bezogen auf die Gesamtzusammensetzung an Weichmacher, wobei besonders bevorzugt das Massenverhältnis von Alkoxylierungsprodukt der Formel (I) und Weichmacher weniger als das 1,1-fache des Alkoxylierungsprodukts der Formel (I) beträgt, von 1 bis 70 Gew.-% bezogen auf die Gesamtzusammensetzung an Füllstoffen, von 0,2 bis 3,0 Gew.-% bezogen auf die Gesamtzusammensetzung an chemischen Feuchtigkeits-Trocknungsmitteln und von 0,1 Gew.-% bis 5,00 Gew.-%, bevorzugt 0,2 bis 3,00 Gew.-% und insbesondere 0,1 bis 5 Gew.-% bezogen auf die Gesamtzusammensetzung an Härtungs-Katalysatoren, auf. Bei ganz besonders bevorzugten Zusammensetzungen sind die genannten Anteile der Formulierungsbestandteile so gewählt, dass sich die Gesamtsumme der Anteile auf 100 Gew.-% summiert.

Die erfindungsgemäßen Zusammensetzungen können z. B. Dicht- oder Klebstoff sein oder zur Herstellung eines Dicht- oder Klebstoffs verwendet werden.

Die erfindungsgemäße Zusammensetzung, insbesondere die so erhaltenen erfindungsgemäßen Zusammensetzung härtet in, zu bisher kommerziell verfügbaren und technisch eingesetzten Produkten vergleichbaren Zeiträumen aus, und vernetzt, so sie in dickeren Schichten appliziert wurde, auch sehr gut in die Tiefe. Die Flankenhaftung und Anbindung an verschiedene Substrate, wie beispielsweise Stahl, Aluminium, verschiedene Kunststoffe und mineralische Untergründe wie beispielsweise Stein, Beton und Mörtel, ist besonders gut.

Die erfindungsgemäßen Zusammensetzungen können insbesondere zur Verstärkung, Nivellierung, Modifikation, Verklebung, Abdichtung und/oder Beschichtung von Substraten verwendet werden. Geeignete Substrate sind z. B. partikuläre oder flächige Substrate, in der Bauindustrie oder im Fahrzeugbau, Konstruktionselemente, Bauteile, Metalle, insbesondere Konstruktionswerkstoffe wie Eisen, Stahl, Edelstahl und Gusseisen, keramische Materialien, insbesondere basierend auf festen Metall- oder Nichtmetalloxiden oder Carbiden, Aluminiumoxid, Magnesiumoxid oder Calciumoxid, mineralische oder organische Substrate, insbesondere Kork und/oder Holz, mineralische Untergründe, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern (aufweisende Substrate) oder Mischungen unterschiedlicher Substrate. Besonders bevorzugt werden die erfindungsgemäßen Zusammensetzungen zur Abdichtung und/oder Beschichtung von partikulären oder flächigen Substraten, in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substraten, zur Beschichtung und Modifikation von Oberflächen und zur Anwendungen auf Metallen, insbesondere auf Konstruktionswerkstoffe wie Eisen, Stahl, Edelstahl und Gusseisen, zur Anwendung auf keramischen Materialien, insbesondere basierend auf festen Metall- oder Nichtmetalloxiden oder Carbiden, Aluminiumoxid, Magnesiumoxid oder Calciumoxid, auf mineralischen Substraten oder organische Substraten, insbesondere auf Kork und/oder Holz, zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern, oder Mischungen unterschiedlicher Substrate, verwendet.

Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.

Die erfindungsgemäßen Zusammensetzungen werden bevorzugt in einem Temperaturbereich von 10°C-40°C appliziert und härten auch unter diesen Bedingungen gut aus. Aufgrund des feuchtigkeitsabhängigen Härtungsmechanismus ist eine relative Luftfeuchtigkeit von min. 35% bis max. 75% für eine gute Härtung besonders bevorzugt. Die ausgehärtete Verklebung (Zusammensetzung) ist in einem Temperaturbereich von -10°C bis 80°C einsetzbar. Die mit den erfindungsgemäßen Zusammensetzungen hergestellten Verklebungen sind beständig gegen Wasser bei T<60°C und gegen nicht quellende Lösungsmittel. Nicht beständig ist die Verklebung gegen die Formulierung quellende Lösungsmittel, wie beispielsweise Methanol, Ethanol, Toluol, Tetrahydrofuran, Aceton, Isopropanol.

Die Quellbarkeit durch Ethanol, welches bei der Vernetzungsreaktion der Alkoxylierungsprodukte entsteht, ist eine grundlegende Voraussetzung, da das entstehende Ethanol auch innerhalb großer Flächenverklebungen die Härtung nicht behindert. Es wird zu den Rändern hin abtransportiert und dampft dort ab. Somit wird eine zügige Härtung der Flächenverklebung mit den erfindungsgemäßen Formulierungen gewährleistet.

Formulierungen auf Basis der erfindungsgemäßen Alkoxylierungsprodukte sind bevorzugt zur Verklebung und/oder Abdichtung von partikulären oder flächigen Substraten geeignet. Eine weitere Einsatzmöglichkeit ist die Verwendung der Formulierungen in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substraten. Als weitere Beispiele sollen hier die Anwendungen auf Metallen, hier vor allem die Konstruktionswerkstoffe wie Eisen, Stahl, Edelstahl und Gusseisen, Eisenwerkstoffen, Aluminium, mineralischen Substraten, wie Stein, Estrich, Mörtel und Beton, Keramiken, Gläsern, keramischen Materialien, vor allem basierend auf festen Metall- oder Nichtmetalloxiden oder Carbiden, Aluminiumoxid, Magnesiumoxid oder Calciumoxid, sowie mineralische Substrate oder organische Substrate, Polyester, glasfaserverstärktem Polyester, Polyamid, Textilien und Gewebe aus Baumwolle und Polyester, Kork und/oder Holz genannt werden. Ebenso kann die Zusammensetzung zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern genutzt werden. Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.
Die in dieser Erfindung verwendeten Alkoxylierungsprodukte können zudem zur Beschichtung und Modifikation von Oberflächen und Fasern verwendet werden.

Damit können die Alkoxylierungsprodukte beispielsweise als Grundstoffe für die Herstellung von Klebstoffen, als reaktive Vernetzer, als Haftvermittler und Primer sowie Bindemittel für Metalle, Glas und Glasfasern/Glasgewebe, Holz, Holzwerkstoffen, Naturfasern, zur Ausrüstung und Behandlung von gegebenenfalls textilen Flächengebilden und Fasern aus natürlichen und/oder synthetischen sowie mineralischen Rohstoffen sowie beispielsweise auch Kork, Leder, Papier, Tissue, silikatischen und oxidischen Materialien dienen. Ein weiterer Gegenstand der vorliegenden Erfindung ist daher die Verwendung der vorab beschriebenen Alkoxylierungsprodukte zur Herstellung von Klebstoffen, als reaktive Vernetzer, als Haftvermittler, als Primer oder als Bindemittel.

Ein weiterer Gegenstand der vorliegenden Erfindung ist die Verwendung von Acetoacetatestern und Diketen zur Verringerung der Viskosität von Alkoxysilylgruppen tragenden Alkoxylierungsprodukten. Bevorzugt ist die Verwendung von Acetoacetatestern und Diketen zur Verringerung der Viskosität von Alkoxysilylgruppen tragenden Alkoxylierungsprodukten durch Modifizierung der freien OH-Gruppen am Kettenende des Alkoxylierungsprodukts mit Acetoacetatestern und Diketen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Allgemeines:

Die Viskosität wurde Scherraten-abhängig bei 25°C mit dem Rheometer MCR301 von Anton Paar in einer Platte-Platte-Anordnung mit einer Spaltbreite von 1 mm bestimmt. Der Durchmesser der oberen Platte betrug 40 mm. Die Viskosität bei einer Scherrate von 10 s⁻¹ wurde abgelesen und ist in Tabelle 1 aufgeführt.

### Beispiele für den Verfahrensschritt (1) - Alkoxylierungsreaktion

### Beispiel 1 (erfindungsgemäß):

### Synthese eines PPG-basierten alkoxysilyl-funktionellen Polyethers:

In einem 5 Liter Autoklaven wurden 500 g PPG 2000 vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130°C erhitzt und auf ca. 20 mbar evakuiert, um leichtflüchtige Komponenten zu entfernen. Nach 30 min wurden zur Aktivierung des Katalysators 60 g Propylenoxid in den evakuierten Reaktor dosiert. Der Innendruck stieg zunächst auf ca. 0,9 bar an. Nach ca. 9 min sprang die Reaktion an, was sich durch einen Abfall im Reaktordruck bemerkbar machte. Nun wurden innerhalb von ca. 55 Minuten kontinuierlich 1250 g Propylenoxid zudosiert. Es schloß sich eine einstündige Nachreaktion an, während derer die Temperatur auf 95°C abgesenkt wurde. Bei dieser Temperatur wurde ein Gemisch aus 209 g Dynasylan^{®} GLYEO (Firma Evonik) und 1042 g Propylenoxid kontinuierlich so zudosiert, dass die Temperatur konstant blieb. Nach einer erneuten einstündigen Nachreaktion wurde durch Anlegen eines Drucks (P < 100 mbar) desodoriert, um Reste an nicht umgesetztem Alkylenoxid zu entfernen. Anschließend wurden 500 ppm Irganox^{®} 1135 (Firma BASF) für 15 Minuten eingerührt. Es wurde ein farbloses, hochviskoses Produkt mit einem mittleren Molekulargewicht gemäß Einwaage von 12 000 g/mol erhalten.

### Beispiel 2 (erfindungsgemäß):

### Synthese eines PPG-basierten alkoxysilyl-funktionellen Polyethers:

In einem 5 Liter Autoklaven wurden 333 g PPG 2000 vorgelegt und mit 150 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 130 C erhitzt und auf ca. 20 mbar evakuiert, um leichtflüchtige Komponenten zu entfernen. Nach 30 min wurden zur Aktivierung des Katalysators 50 g Propylenoxid in den evakuierten Reaktor dosiert. Der Innendruck stieg zunächst auf ca. 0,9 bar an. Nach ca. 15 min sprang die Reaktion an, was sich durch einen Abfall im Reaktordruck bemerkbar machte. Nun wurden innerhalb von ca. 5 Minuten kontinuierlich 117 g Propylenoxid zudosiert. Es schloß sich eine einstündige Nachreaktion an. Dann wurde ein Gemisch aus 541 g Ethylenoxid und 788 g Propylenoxid angelagert und nach einer dreißigminütigen Nachreaktion weitere 167 g Propylenoxid innerhalb von ca. 10 Minuten. Nun schloß sich eine ca. 90-minütige Nachreaktion an, während derer die Temperatur auf 95°C abgesenkt wurde. Bei dieser Temperatur wurde abschließend ein Gemisch aus 162 g Dynasylan^{®} GLYEO (Firma Evonik) und 844 g Propylenoxid kontinuierlich so zudosiert, dass die Temperatur konstant blieb. Nach einer erneuten einstündigen Nachreaktion wurde durch Anlegen eines Drucks (P < 100 mbar) desodoriert, um Reste an nicht umgesetztem Alkylenoxid zu entfernen. Anschließend wurden 500 ppm Irganox^{®} 1135 (Firma BASF) für 15 Minuten eingerührt. Es wurde ein farbloses, hochviskoses Produkt mit einem mittleren Molekulargewicht gemäß Einwaage von 18 000 g/mol erhalten.

### Beispiele für den Verfahrensschritt (2) - Endverkappungsreaktion

### Beispiel 3 (Vergleichsbeispiel):

### Endverkappung des Polyethers aus Beispiel 1 mit Isophorondiisocyanat (Verfahren nach EP 2636696):

In einem 1 L-Dreihalskolben mit KPG-Rührer wurden unter Stickstoff 750,8 g Silylpolyether aus Beispiel 1 vorgelegt und auf 70 °C erhitzt. Anschließend wurden 33,4 g IPDI zugesetzt, fünf Minuten gerührt und 0,05 mL TIB Kat 216 (Dioctylzinndilaurat) zugesetzt. Es wurde 45 min lang gerührt und 67,8 g eines Polyethers der allgemeinen Formel C₄H₉O[CH₂CH(CH₃)O]_{5,6}H zugesetzt. Anschließend wurde weitere 5 h lang bei 70 °C gerührt.

### Beispiel 4 (erfindungsgemäß):

### Endverkappung des Polyethers aus Beispiel 1 mit tert-Butylacetoacetat

In einem 1 L-Dreihalskolben ausgestattet mit einem Rückflußkühler und einem KPG-Rührer wurden unter Stickstoff 721,8 g Silylpolyether aus Beispiel 1 vorgelegt und auf 100 °C erhitzt. Bei dieser Temperatur wurden über einen Zeitraum von 10 Minuten 19,1 g tert-Butylacetoacetat zugetropft. Nach einer dreistündigen Nachreaktion schloß sich abschließend eine einstündige Destillation im Vakuum bei ca. 15 mbar an, um Nebenreaktionsprodukte und niedermolekulare Verunreinigungen zu entfernen.

### Beispiel 5 (erfindungsgemäß):

### Endverkappung des Polyethers aus Beispiel 1 mit tert-Butylacetoacetat

In einem 1 L-Dreihalskolben ausgestattet mit einem Rückflußkühler und einem KPG-Rührer wurden unter Stickstoff 720,6 g Silylpolyether aus Beispiel 1 vorgelegt und auf 100 °C erhitzt. Bei dieser Temperatur wurden über einen Zeitraum von 10 Minuten 19,1 g tert-Butylacetoacetat zugetropft. Nach einer dreistündigen Nachreaktion wurde die Reaktion ohne Destillation beendet.

### Beispiel 6 (erfindungsgemäß):

### Endverkappung des Polyethers aus Beispiel 1 mit Ethylacetoacetat

In einem 1 L-Dreihalskolben ausgestattet mit einem Rückflußkühler und einem KPG-Rührer wurden unter Stickstoff 714,3 g Silylpolyether aus Beispiel 1 vorgelegt und auf 110 °C erhitzt. Bei dieser Temperatur wurden über einen Zeitraum von 15 Minuten 15,5 g Ethylacetoacetat zugetropft. Nach einer dreistündigen Nachreaktion schloß sich abschließend eine einstündige Destillation im Vakuum bei ca. 15 mbar an, um Nebenreaktionsprodukte und niedermolekulare Verunreinigungen zu entfernen.

### Beispiel 7 (erfindungsgemäß):

In einem 500 mL-Dreihalskolben ausgestattet mit einem Rückflußkühler und einem KPG-Rührer wurden unter Stickstoff 160 g Silylpolyether aus Beispiel 1 vorgelegt Bei Raumemperatur wurden 4,64 g tert-Butylacetoacetat zugegeben und das Reaktionsgemisch auf 100 °C erhitzt. Nach einer dreistündigen Nachreaktion schloß sich eine 30-minütige Destillation im Vakuum bei ca. 15 mbar an. Nun wurde mit Stickstoff auf Normaldruck belüftet und anschließend wurden weitere 2,32 g tert-Butylacetoacetat zugesetzt. Nach einer weiteren dreistündigen Nachreaktionszeit wurde abschließend eine weitere 30-minütige Destillation im Vakuum bei ca. 15 mbar durchgeführt, um Nebenreaktionsprodukte und niedermolekulare Verunreinigungen zu entfernen.

### Beispiel 8 (erfindungsgemäß):

In einem 500 mL-Dreihalskolben ausgestattet mit einem Rückflußkühler und einem KPG-Rührer wurden unter Stickstoff 250 g Silylpolyether aus Beispiel 1 vorgelegt und 6,6 g tert-Butylacetoacetat zugegeben. Das Reaktionsgemisch wurde auf 120 °C erhitzt und drei Stunden bei dieser Temperatur gerührt. Abschließend wurde eine einstündige Destillation im Vakuum bei ca. 15 mbar durchgeführt, um Nebenreaktionsprodukte und niedermolekulare Verunreinigungen zu entfernen.

### Beispiel 9 (erfindungsgemäß):

In einem 500 mL-Dreihalskolben ausgestattet mit einem Rückflußkühler und einem KPG-Rührer wurden unter Stickstoff 123,2 g Silylpolyether aus Beispiel 1 vorgelegt und 4,86 g tert-Butylacetoacetat zugegeben. Das Reaktionsgemisch wurde auf 100 °C erhitzt und drei Stunden bei dieser Temperatur gerührt. Abschließend wurde eine einstündige Destillation im Vakuum bei ca. 15 mbar durchgeführt, um Nebenreaktionsprodukte und niedermolekulare Verunreinigungen zu entfernen.

### Beispiel 10 (Vergleichsbeispiel):

In einem 500 mL-Dreihalskolben ausgestattet mit einem Rückflußkühler und einem KPG-Rührer wurden unter Stickstoff 123,2 g Silylpolyether aus Beispiel 1, 0,15 g Titan(IV)-isopropoxid (als Katalysator) vorgelegt und 4,86 g tert-Butylacetoacetat zugegeben. Das Reaktionsgemisch wurde auf 100 °C erhitzt und drei Stunden bei dieser Temperatur gerührt. Abschließend wurde eine einstündige Destillation im Vakuum bei ca. 15 mbar durchgeführt, um Nebenreaktionsprodukte und niedermolekulare Verunreinigungen zu entfernen.

### Beispiel 11 (erfindungsgemäß):

Beispiel 11 wurde analog zu Beispiel 4 durchgeführt. Es wurden 1231 g Silylpolyether aus Beispiel 2 und 21, 6 g tert-Butylacetoacetat eingesetzt.

### Beispiel 12 (erfindungsgemäß):

Beispiel 12 wurde analog zu Beispiel 6 durchgeführt. Es wurden 1231 g Silylpolyether aus Beispiel 2 und 17,8 g Ethylacetoacetat eingesetzt.

### Anwendungstechnische Untersuchung

### Bestimmung der Lagerstabilität

Zur Evaluierung der Lagerstabilität wurden alle Alkoxylierungsprodukte der Beispiele 1-12 gemäß der in Beispiel 13 beschriebenen Vorgehensweise formuliert.

### Beispiel 13 (erfindungsgemäß):

Je 19,9 g der Alkoxylierungsprodukte der Beispiele 1-12 wurden in ein zuvor mit Argon geflutetes Schraubdeckelglas gefüllt,mit 0,1 g TIB Kat 223 versetzt und mit Hilfe eines Spatels gut durchmischt. Das Gemisch wurde nochmals mit Argon überlagert und mit einem Schraubdeckel verschlossen. Die Proben wurden anschließend bei 60°C in einem Wärmeschrank für 4 Wochen gelagert und die Fließfähigkeit des Gemisches in regelmäßigen Abständen kontrolliert. Die Ergebnisse sind in Tabelle 1 zusammengefasst.

**Tabelle 1: Viskositäten und Lagerstabilitäten der unverkappten (Beispiele 1 + 2) und endverkappten (Beispiele 3-12) Alkoxylierungsprodukte**

| Beispiel | Viskosität (25°C) [Pa · s] | Lagertest (Konsistenz nach 4 W) |
|---|---|---|
| **1** | **8,0** | **fest** |
| **2** | **16,3** | **fest** |
| **3** | **30,7** | **flüssig** |
| **4** | **8,1** | **flüssig** |
| **5** | **6,8** | **flüssig** |
| **6** | **7,2** | **flüssig** |
| **7** | **7,9** | **flüssig** |
| **8** | **8,3** | **flüssig** |
| **9** | **7,9** | **flüssig** |
| **10** | **11,7** | **fest** |
| **11** | **15,5** | **flüssig** |
| **12** | **15,8** | **flüssig** |

### Ansetzen der raumtemperaturapplizierbaren Kleb-/Dichtstoff-Formulierungen:

25,9 Gew.-% des Alkoxylierungsprodukt nach den jeweiligen Beispielen wurde mit 18,1 Gew.-% von Diioundecylphthalat, 51,1 Gew.-% einer gefällten Kreide (Socal^{®} U1S2, Solvay), 0,5 Gew.-% Titandioxid (Kronos^{®} 2360, Kronos), 1,4 Gew.-% Haftvermittler (Dynasylan^{®} 1189, Evonik), 1,1 Gew.-% Trocknungsmittel (Dynasylan^{®} VTMO, Evonik), 1,5 Gew.-% Teile eines Antioxidans-Stabilisator-Gemisches (Verhältnis Irganox^{®} 1135:Tinuvin^{®} 1130:Tinuvin^{®} 292 = Verhältnis 1:2:2 und 0,4 Gew.-% des Härtungskatalysators (TIB^{®} KAT 223, TIB) im Mischer (Speedmixer^{®} FVS 600, Hausschild) intensiv vermischt. Die fertige Formulierung wurde in PE-Kartuschen überführt und vor der Applikation mindestens 24h bei Raumtemperatur gelagert. Da die Formulierungen der Alkoxylierungsprodukte in den oben genannten Beispielen in allen Fällen identisch waren, wurde die Ergebnisdiskussion anhand der Benennung des als Basis der Formulierung genutzten Alkoxylierungsproduktes durchgeführt.

### Bestimmung von Bruchkraft und Bruchdehnung in Anlehnung an DIN 53504:

Die Formulierung wurde mit einer Schichtdicke von 2 mm auf eine PE-Oberfläche aufgerakelt. Die Filme wurden 7 Tage bei 23 °C und 50% relativer Luftfeuchte gelagert. Anschließend wurden aus den Filmen mit Hilfe einer Schneidform und einer Kniehebelpresse S2-Schulterstäbe ausgestanzt. Die so hergestellten Schulterstäbe wurden zur Prüfung in eine Universalprüfmaschine (Fa. Shimadzu) eingespannt, und es wurden die Bruchkraft und die Bruchdehnung beim Dehnen der Probekörper mit konstanter Geschwindigkeit (200 mm/min) ermittelt.

### Bestimmung der Zugscherfestigkeit von Überlappungsklebungen in Anlehnung an DIN EN 1465

Mit der angefertigten Formulierung wurden Überlappungsverklebungen erstellt. Hierbei wurden zwei Edelstahl Substrate (V2A, 1.4301) eingesetzt. Der Bereich der Überlappungsverklebung betrug 500 mm². Die Aushärtung der Verklebungen erfolgte bei 23°C und 50% relativer Luftfeuchte. Nach 21 Tagen wurden die Verklebungen in eine Universalprüfmaschine (Fa. Shimadzu) eingespannt, und es wurde mit konstanter Geschwindigkeit (10 mm/min) eine Kraft auf die Verklebung ausgeübt, bis ein Bruch der Verklebung eintrat. Die Bruchkraft wurde ermittelt.

**Tabelle 2: Mechanische Kennwerte der ausgehärteten Formulierung am S2-Schulterstab und an einer Überlappungsverklebung zweier V2A-Bleche:**

| Polymer nach Beispiel | S2-Schulterstab | | Verklebung | Tiefenhärtung |
|---|---|---|---|---|
| | Bruchdehnung [%] | Bruchspannung [N/mm²] | Bruchspannung [N/mm²] | [mm] / 24 h |
| **1** | **246** | **0,53** | **0,41** | **1,8** |
| **3** | **409** | **0,83** | **0,79** | **1,9** |
| **4** | **301** | **0,64** | **0,64** | **1,9** |
| **5** | **316** | **0,63** | **0,64** | **1,8** |
| **6** | **310** | **0,54** | **0,68** | **2,0** |

### Fazit:

Wie Tabelle 1 zu entnehmen ist, sind die unverkappten Alkoxylierungsprodukte der Beispiele 1 und 2 sowie der mittels Titanat-Katalyse endverkappte Polyether aus Beispiel 9 nicht lagerstabil. Alle anderen Alkoxylierungsprodukte waren gemäß Beispiel 13 lagerstabil, sowohl die erfindungsgemäßen Beispiele 4-9 und 11-12 als auch das Vergleichsbeispiel 3. Bei näherer Betrachtung der Viskositäten stellt man fest, dass die Endverkappung der Alkoxylierungsprodukte nach dem erfindungsgemäßen Verfahren (Beispiele 4-9 und 11-12 nahezu keinen Einfluß auf die Viskosität der Alkoxylierungsprodukte hat und somit deutlich geringere und besser zu verarbeitende Viskositäten aufweisen als das mit Isophorondiisocyanat verkappte Vergleichsbeispiel 3.

Den anwendungstechnischen Eigenschaften gemäß Tabelle 2 ist zu entnehmen, dass mit den erfindungsgemäßen Produkten aus den Beispielen 4-6 im Vergleich zu dem mit Isophoron verkappten Alkoxylierungsprodukt (Beispiel 3) keine wesentlichen Unterschiede zu verzeichnen sind. Im Vergleich zum unverkappten Produkt (Beispiel 1) sind mit den erfindungsgemäßen Produkten (Beispiel 4-6) höhere Dehnungswerte sowie höhere Festigkeiten zu beobachten.

## Patentansprüche

1. Alkoxylierungsprodukte, enthaltend mindestens eine nicht terminale Alkoxysilylgruppe, aus Monomeren von mindestens einem Alkylenoxid und mindestens einem Alkoxysilylgruppen tragenden Epoxid **dadurch gekennzeichnet, dass** mindestens 30 % aller freien OH- Gruppen am Kettenende des Alkoxylierungsprodukts zu Acetoacetatgruppen umgesetzt sind.

2. Alkoxylierungsprodukte nach Anspruch 1 **dadurch gekennzeichnet, dass** mindestens 30%, bevorzugt mindestens 40%, besonders bevorzugt mindestens 50% und insbesondere bevorzugt mindestens 60% aller freien OH-Gruppen am Kettenende der Alkoxylierungsprodukte zu Acetoacetatgruppen umgesetzt sind.

3. Alkoxylierungsprodukte nach einem der Ansprüche 1 oder 2 **dadurch gekennzeichnet, dass** sie eine Viskosität von ≤ 25 Pa · s, bevorzugt ≤ 15 Pa · s, insbesondere bevorzugt ≤ 10 Pa ·s aufweisen.

4. Alkoxylierungsprodukte nach einem der Ansprüche 1 bis 3, wobei die Alkoxylierungsprodukte der Formel (I) entsprechen, 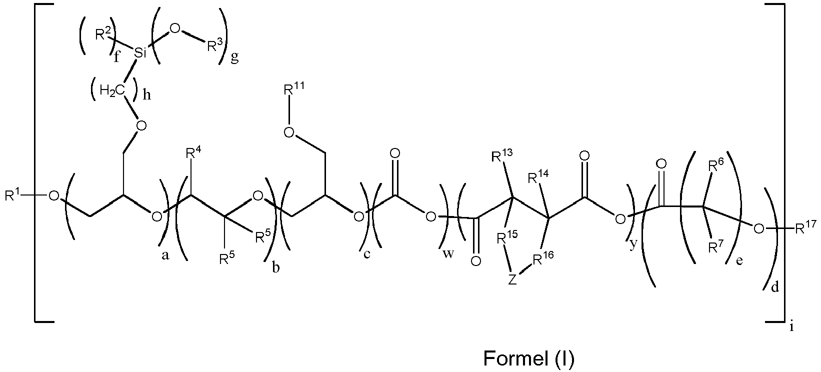 wobei
a = 0 bis 100,
b = 0 bis 1000,
c = 0 bis 200,
d = 0 bis 200,
w = 0 bis 200,
y = 0 bis 500,
e = 1 bis 10,
f = 0 bis 2
g = 1 bis 3
mit der Maßgabe, dass g + f = 3
h = 0 bis 10,
i = 1 bis 10,
mit der Maßgabe, dass die Gruppen mit den Indices a, b, c, d, w und y frei permutierbar über die Molekülkette sind, wobei die Gruppen mit den Indices w und y jeweils nicht auf sich selbst oder auf die jeweils andere Gruppe folgen dürfen und
mit der Maßgabe, dass die verschiedenen Monomereinheiten sowohl der Fragmente mit den Indices a, b, c, d, w und y als auch der gegebenenfalls vorhandenen Polyoxyalkylenkette des Substituenten R¹ untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices w und y jeweils nicht auf sich selbst oder auf die jeweils andere Gruppe folgen dürfen,
und wobei
R¹ = unabhängig voneinander R¹⁷ oder ein gesättigter oder ungesättigter, linearer oder verzweigter organischer Kohlenwasserstoffrest ist, der als Heteroatome O, S und / oder N enthalten kann,
bevorzugt enthält der Kohlenwasserstoffrest 1 bis 400 Kohlenstoffatome, bevorzugt 2, 3 oder 4 bis 200 Kohlenstoffatome,
R² = unabhängig voneinander eine Alkylgruppe mit 1 bis 8 Kohlenstoffatomen,
R³ = unabhängig voneinander eine Alkylgruppe mit 1 bis 8 Kohlenstoffatomen,
R⁴ = unabhängig voneinander ein Wasserstoffradikal, eine Alkylgruppe mit 1 bis 20 Kohlenstoffatomen, eine Aryl- oder Alkarylgruppe,
R⁵ = unabhängig voneinander ein Wasserstoffradikal oder eine Alkylgruppe mit 1 bis 8 Kohlenstoffatomen,
oder R⁴ und einer der Reste R⁵ können gemeinsam einen Ring bilden, der die Atome, an die R⁴ und R⁵ gebunden sind, einschließt, bevorzugt enthält dieser Ring 5 bis 8 Kohlenstoffatome,
R⁶ und R⁷ = unabhängig voneinander ein Wasserstoffradikal, eine Alkylgruppe mit 1 bis 20 Kohlenstoffatomen, eine Aryl- oder Alkarylgruppe oder eine Alkoxygruppe,
R¹¹ = unabhängig voneinander ein gesättigter oder ungesättigter, aliphatischer oder aromatischer Kohlenwasserstoffrest mit 2 bis 30 C-Atomen, der gegebenenfalls substituiert ist,
R¹³, R¹⁴ = unabhängig voneinander Wasserstoff oder ein organischer Rest, bevorzugt Alkyl-, Alkenyl-, Alkyliden, Alkoxy-, Aryl- oder Aralkylgruppen, oder gegebenenfalls können R¹³ und/oder R¹⁴ auch nicht vorhanden sein, wobei wenn R¹³ und R¹⁴ nicht vorhanden sind, statt der Reste R¹³ und R¹⁴ eine C=C Doppelbindung vorhanden ist,
das überbrückende Fragment Z kann vorhanden oder nicht vorhanden sein,
ist das überbrückende Fragment Z nicht vorhanden so sind,
R¹⁵ und R¹⁶ = unabhängig voneinander Wasserstoff oder ein organischer Rest, wobei für den Fall, dass einer der Reste R¹³ oder R¹⁴ nicht vorhanden ist, der jeweilige geminale Rest ein Alkylidenrest ist,
ist das überbrückende Fragment Z vorhanden, so sind
R¹⁵ und R¹⁶ = Kohlenwasserstoffreste , die cycloaliphatisch oder aromatisch über das Fragment Z verbrückt sind, wobei Z einen divalenten Alkylen- oder Alkenylenrest darstellt, der weiter substituiert sein kann,
R¹⁷ = unabhängig voneinander Wasserstoff oder ein Rest der Formel (II) 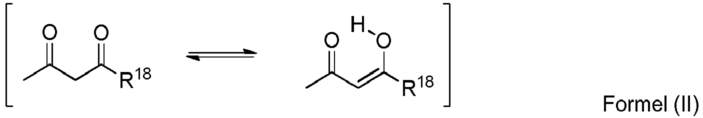 mit
R¹⁸ = unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, bevorzugt Methyl-, Ethyl-, Phenyl-, besonders bevorzugt Methyl- oder Ethyl- ist,
und mit der Maßgabe, dass mindestens 30% der Reste R¹⁷ Formel (II) entsprechen.

5. Alkoxylierungsprodukt nach Anspruch 4 wobei
a = 1 bis 50
b = 1 bis 500
c = 0 bis 50
d = 0 bis 50
w = 0 bis 50
y = 0 bis 100,
e = 1 bis 10,
f = 0 bis 2
g = 1 bis 3
mit der Maßgabe, dass g + f = 3
h = 1 bis 6 und
i = 1 bis 5 ist.

6. Alkoxylierungsprodukt nach einem der Ansprüche 4 oder 5 mit
a = 1 bis 20,
b = 10 bis 500,
c = 0 bis 20,
d = 0 bis 20,
w = 0 bis 20,
y = 0 bis 20,
e = 1 bis 10,
f = 0 bis 2
g = 1 bis 3
mit der Maßgabe, dass g + f = 3
h = 1, 2 oder 3
i = 1, 2 oder 3 und
R¹ = unabhängig voneinander R¹⁷ oder ein Alkylrest mit 2 bis 12 Kohlenstoffatomen,
R² = unabhängig voneinander eine Methyl-, Ethyl-, Propyl-, oder Isopropylgruppe,
R³ = unabhängig voneinander eine Methyl-, Ethyl-, Propyl-, oder Isopropylgruppe,
R⁴ = unabhängig voneinander Wasserstoff oder eine Methyl-, Ethyl-, Octyl-, Decyl-, Dodecyl-, Phenyl- oder Benzylgruppe,
R⁵ = unabhängig voneinander Wasserstoff oder eine Methyl- oder Ethylgruppe R¹¹ = unabhängig voneinander eine gegebenenfalls substituierte Alkylkette mit 4 bis 20 Kohlenstoffatomen,
R¹⁷ = unabhängig voneinander Wasserstoff oder ein Rest der Formel (II) 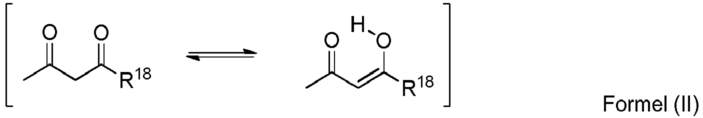 mit
R¹⁸ = Methyl-, Ethyl-, oder Phenyl-,
und mit der Maßgabe, dass mindestens 30% der Reste R¹⁷ Formel (II) entsprechen.

7. Alkoxylierungsprodukte enthaltend mindestens eine nicht terminale Alkoxysilylgruppe und wobei mindestens 30 % aller freien OH-Gruppen am Kettenende des Alkoxylierungsprodukts zu Acetoacetatgruppen umgesetzt sind, erhältlich durch Umsetzung von mindestens einem Alkylenoxid mit mindestens einem Alkoxysilylgruppen tragenden Epoxid und gegebenenfalls weiteren Monomeren und anschließender Umsetzung des erhaltenen Produkts mit Acetoacetatestern und/oder Diketen.

8. Alkoxylierungsprodukt nach Anspruch 7, wobei mindestens Ethylenoxid und/oder Propylenoxid als Alkylenoxid und mindestens ein n-Glycidyloxy-alkyltrialkoxysilan als Alkoxysilylgruppen tragendes Epoxid eingesetzt werden.

9. Verfahren zur Herstellung von Alkoxylierungsprodukten nach einem der Ansprüche 1 bis 6, wobei mindestens ein Alkylenoxid mit mindestens einem Alkoxysilylgruppen tragenden Epoxid und gegebenenfalls weiteren Monomeren umgesetzt wird und das so erhaltene Produkt mit Acetoacetatestern und/oder Diketenen umgesetzt wird.

10. Verfahren nach Anspruch 9 umfassend die Schritte
(1) Umsetzen mindestens eines Starters, ausgewählt aus der Gruppe der Alkohole, Polyetherole oder Phenole, mit mindestens einem Alkylenoxid und mindestens einem Alkoxysilylgruppen tragenden Epoxid, und
(2) Umsetzen des OH-terminierten Alkoxylierungsproduktes aus Schritt (1) mit mindestens einem Acetoacetat-Ester oder Diketen, wobei es sich bei Starter um OH-funktionelle Verbindungen sowie den Alkylenoxiden und Reaktanden um die zuvor als bevorzugt definierten handelt.

11. Verfahren nach einem der Ansprüche 9 oder 10, wobei der Starter R¹-(OH)ᵢ ausgewählt ist aus Methanol, Ethanol, Propanol, Isopropanol, Butanol, iso-Butanol, tert-Butanol, 2,2,4-Trimethyl-1,3-pentandiol monoisobutyrat, Octanol, 2-Ethylhexanol, 2-Propylheptanol, Allylalkohol, Decanol, Dodecanol, C₁₂/C₁₄-Fettalkohol, Phenol, alle Konstitutionsisomere des Kresols, Benzylalkohol, Stearylalkohol, Ethylenglykol, Propylenglykol, Di-/Triethylenglykol, 1,2-Propylenglykol, Di-/Tripropylenglykol, Neopentylglykol, 1,4-Butandiol, 1,2-Hexandiol und 1,6-Hexandiol, Trimethylolpropan- oder Glycerinmonoether, Polyethylenoxiden, Polypropylenoxiden, Polyestern, Polycarbonaten, Polycarbonatpolyolen, Polyesterpolyolen, Polyetherestern, Polyetherolen, Polyethercarbonaten, Polyamiden, Polyurethanen und Zucker-basierten Alkoxylaten und Mischungen daraus.

12. Verfahren nach einem der Ansprüche 9 bis 11, wobei das Alkylenoxid ausgewählt ist aus Ethylenoxid, 1,2-Epoxypropan, 1,2-Epoxy-2-methylpropan, Epichlorhydrin, 2,3-Epoxy-1-propanol, 1,2-Epoxybutan, 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl) -1,2-epoxypropan, 3-(Perfluorohexyl)-1,2-epoxypropan, 4-(2,3-Epoxypropyl)morpholin, 1-(Oxiran-2-ylmethyl)pyrrolidin-2-on und Mischungen daraus und wobei das Alkoxysilylgruppen tragende Epoxid ausgewählt ist aus 3-Glycidyloxypropyltrimethoxysilan, 3-Glycidyloxypropyltriethoxysilan, 3-Glycidyloxypropyltripropoxysilan, 3-Glycidyloxypropyltrüsopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan und Mischungen daraus.

13. Verfahren nach einem der Ansprüche 9 bis 12 **dadurch gekennzeichnet, dass** die Acetoacetatester und Diketene ausgewählt sind aus Diketen, Methylacetoacetat, Ethylacetoacetat, Allylacetoacetat, Propylacetoacetat, Isopropylacetoacetat, Butylacetoacetat, Isobutylacetoacetat, tert-Butylacetoacetat, Pentylacetoacetat, Hexylacetoacetat, Heptylacetoacetat, 2-Methoxyethyl-acetoacetat, 2-(Methacryloyloxy)ethylacetoacetat, Benzylacetoacetat und Mischungen daraus.

14. Verwendung von Alkoxylierungsprodukten nach einem der Ansprüche 1 bis 8 zur Herstellung von Kleb- und Dichtstoffen, als Reaktivverdünner in Kleb- und Dichtstoffformulierungen, zur Beschichtung und Modifikation von Oberflächen und Faser, als reaktive Vernetzer, als Haftvermittler, als Primer oder als Bindemittel.

15. Verwendung von Acetoacetatestern und Diketen zur Verringerung der Viskosität von lagerstabilen Alkoxysilylgruppen-tragenden Alkoxylierungsprodukten.

## Claims

1. Alkoxylation products containing at least one non-terminal alkoxysilyl group, formed from monomers of at least one alkylene oxide and at least one epoxide bearing alkoxysilyl groups, **characterized in that** at least 30% of all the free OH groups on the chain end of the alkoxylation product have been converted to acetoacetate groups.

2. Alkoxylation products according to Claim 1, **characterized in that** at least 30%, preferably at least 40%, more preferably at least 50% and especially preferably at least 60% of all the free OH groups on the chain end of the alkoxylation product have been converted to acetoacetate groups.

3. Alkoxylation products according to either of Claims 1 and 2, **characterized in that** they have a viscosity oft 25 Pa · s, preferably ≤ 15 Pa · s, especially preferably ≤ 10 Pa ·s.

4. Alkoxylation products according to any of Claims 1 to 3, wherein the alkoxylation products correspond to the formula (I) 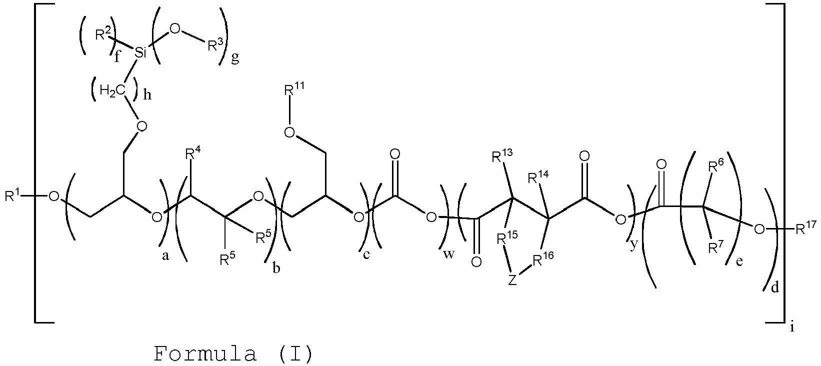 where
a = 0 to 100,
b = 0 to 1000,
c = 0 to 200,
d = 0 to 200,
w = 0 to 200,
y = 0 to 500,
e = 1 to 10,
f = 0 to 2,
g = 1 to 3
with the proviso that g + f = 3
h = 0 to 10,
i = 1 to 10,
with the proviso that the groups with the indices a, b, c, d, w and y are freely permutable over the molecule chain, it being disallowed for each of the groups with the indices w and y to follow itself or the other respective group, and with the proviso that the various monomer units both of the fragments having the indices a, b, c, d, w and y and of any polyoxyalkylene chain present in the substituent R¹ may be constructed blockwise among one another, it also being possible for individual blocks to occur multiply and to be distributed statistically among one another, or else are subject to a statistical distribution and, moreover, are freely permutable with one another, in the sense of being for arrangement in any desired order, with the restriction that each of the groups of the indices w and y must not follow itself or the other respective group,
and where
R¹ = independently at each occurrence R¹⁷ or a saturated or unsaturated, linear or branched organic hydrocarbon radical which may contain O, S and/or N as heteroatoms,
the hydrocarbon radical preferably contains 1 to 400 carbon atoms, preferably 2, 3 or 4 to 200 carbon atoms,
R² = independently at each occurrence an alkyl group having 1 to 8 carbon atoms,
R³ = independently at each occurrence an alkyl group having 1 to 8 carbon atoms,
R⁴ = independently at each occurrence a hydrogen radical, an alkyl group having 1 to 20 carbon atoms, or an aryl or alkaryl group,
R⁵ = independently at each occurrence a hydrogen radical or an alkyl group having 1 to 8 carbon atoms,
or R⁴ and one of the radicals R⁵ may together form a ring which includes the atoms to which R⁴ and R⁵ are bonded, this ring preferably comprising 5 to 8 carbon atoms,
R⁶ and R⁷ = independently at each occurrence a hydrogen radical, an alkyl group having 1 to 20 carbon atoms, or an aryl or alkaryl group or an alkoxy group,
R¹¹ = independently at each occurrence a saturated or unsaturated, aliphatic or aromatic, hydrocarbon radical having 2 to 30 carbon atoms, which is optionally substituted, R¹³, R¹⁴ = independently at each occurrence hydrogen or an organic radical, preferably alkyl, alkenyl, alkylidene, alkoxy, aryl or aralkyl groups, or else optionally R¹³ and/or R¹⁴ may be absent, where, when R¹³ and R¹⁴ are absent, there is a C=C double bond in place of the R¹³ and R¹⁴ radicals,
the bridging Z fragment may be present or absent,
when the bridging Z fragment is absent, then
R¹⁵ and R¹⁶ = independently at each occurrence hydrogen or an organic radical, where, if one of the R¹³ and R¹⁴ radicals is absent, the respective geminal radical is an alkylidene radical,
when the bridging Z fragment is present, then R¹⁵ and R¹⁶ = hydrocarbon radicals which are bridged cycloaliphatically or aromatically via the Z fragment, Z representing a divalent alkylene or alkenylene radical which may be further substituted,
R¹⁷ = independently at each occurrence hydrogen or a radical of the formula (II) 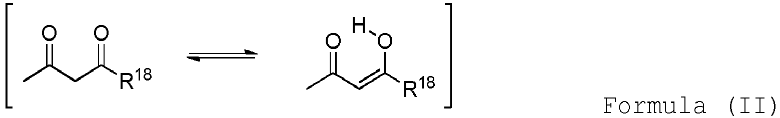 where
R¹⁸ = independently at each occurrence a linear or branched, saturated or unsaturated, optionally further-substituted alkyl group having 1 to 30 carbon atoms, or an aryl or alkaryl group, preferably methyl, ethyl, phenyl, more preferably methyl or ethyl,
and with the proviso that at least 30% of the R¹⁷ radicals correspond to formula (II).

5. Alkoxylation product according to Claim 4, where
a = 1 to 50,
b = 1 to 500,
c = 0 to 50,
d = 0 to 50,
w = 0 to 50,
y = 0 to 100,
e = 1 to 10,
f = 0 to 2,
g = 1 to 3
with the proviso that g + f = 3
h = 1 to 6 and
i = 1 to 5.

6. Alkoxylation product according to either of Claims 4 and 5 with
a = 1 to 20,
b = 10 to 500,
c = 0 to 20,
d = 0 to 20,
w = 0 to 20,
y = 0 to 20,
e = 1 to 10,
f = 0 to 2,
g = 1 to 3
with the proviso that g + f = 3
h = 1, 2 or 3
i = 1, 2 or 3 and
R¹ = independently at each occurrence R¹⁷ or an alkyl radical having 2 to 12 carbon atoms,
R² = independently at each occurrence a methyl, ethyl, propyl or isopropyl group,
R³ = independently at each occurrence a methyl, ethyl, propyl or isopropyl group,
R⁴ = independently at each occurrence hydrogen or a methyl, ethyl, octyl, decyl, dodecyl, phenyl or benzyl group,
R⁵ = independently at each occurrence hydrogen or a methyl or ethyl group,
R¹¹ = independently at each occurrence an optionally substituted alkyl chain having 4 to 20 carbon atoms,
R¹⁷ = independently at each occurrence hydrogen or a radical of the formula (II) 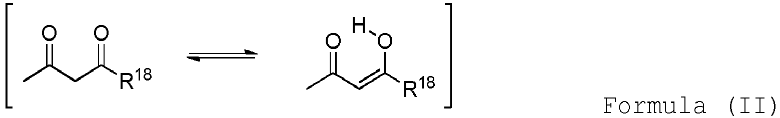 where
R¹⁸ = methyl, ethyl or phenyl,
and with the proviso that at least 30% of the R¹⁷ radicals correspond to formula (II).

7. Alkoxylation products containing at least one non-terminal alkoxysilyl group and wherein at least 30% of all the free OH groups on the chain end of the alkoxylation product have been converted to acetoacetate groups, obtainable by reaction of at least one alkylene oxide with at least one epoxide bearing alkoxysilyl groups and optionally further monomers and subsequent reaction of the product obtained with acetoacetate esters and/or diketene.

8. Alkoxylation product according to Claim 7, wherein at least ethylene oxide and/or propylene oxide is used as alkylene oxide and at least one n-glycidyloxyalkyltrialkoxysilane as epoxide bearing alkoxysilyl groups.

9. Process for preparing alkoxylation products according to any of Claims 1 to 6, wherein at least one alkylene oxide is reacted with at least one epoxide bearing alkoxysilyl groups and optionally further monomers, and the product thus obtained is reacted with acetoacetate esters and/or diketene.

10. Process according to Claim 9, comprising the steps of
(1) reacting at least one starter selected from the group of the alcohols, polyetherols and phenols with at least one alkylene oxide and at least one epoxide bearing alkoxysilyl groups, and
(2) reacting the OH-terminated alkoxylation product from step (1) with at least one acetoacetate ester or diketene, wherein starters are OH-functional compounds and the alkylene oxides and reactants are those defined above as preferred.

11. Process according to either of Claims 9 and 10, wherein the starter R¹-(OH)ᵢ is selected from methanol, ethanol, propanol, isopropanol, butanol, isobutanol, tert-butanol, 2,2,4-trimethylpentane-1,3-diol monoisobutyrate, octanol, 2-ethylhexanol, 2-propylheptanol, allyl alcohol, decanol, dodecanol, C₁₂/C₁₄ fatty alcohol, phenol, all constitutional isomers of cresol, benzyl alcohol, stearyl alcohol, ethylene glycol, propylene glycol, di-/triethylene glycol, 1,2-propylene glycol, di-/tripropylene glycol, neopentyl glycol, butane-1,4-diol, hexane-1,2-diol and hexane-1,6-diol, trimethylolpropane monoethers or glycerol monoethers, polyethylene oxides, polypropylene oxides, polyesters, polycarbonates, polycarbonate polyols, polyester polyols, polyether esters, polyetherols, polyether carbonates, polyamides, polyurethanes and sugar-based alkoxylates and mixtures thereof.

12. Process according to any of Claims 9 to 11, wherein the alkylene oxide is selected from ethylene oxide, 1,2-epoxypropane, 1,2-epoxy-2-methylpropane, epichlorohydrin, 2,3-epoxy-1-propanol, 1,2-epoxybutane, 2,3-epoxybutane, 2,3-dimethyl-2,3-epoxybutane, 1,2-epoxypentane, 1,2-epoxy-3-methylpentane, 1,2-epoxyhexane, 1,2-epoxycyclohexane, 1,2-epoxyheptane, 1,2-epoxyoctane, 1,2-epoxynonane, 1,2-epoxydecane, 1,2-epoxyundecane, 1,2-epoxydodecane, styrene oxide, 1,2-epoxycyclopentane, 1,2-epoxycyclohexane, vinylcyclohexene oxide, (2,3-epoxypropyl)benzene, vinyloxirane, 3-phenoxy-1,2-epoxypropane, 2,3-epoxy methyl ether, 2,3-epoxy ethyl ether, 2,3-epoxy isopropyl ether, 3,4-epoxybutyl stearate, 4,5-epoxypentyl acetate, 2,3-epoxypropane methacrylate, 2,3-epoxypropane acrylate, glycidyl butyrate, methyl glycidate, ethyl 2,3-epoxybutanoate, 4-(trimethylsilyl)butane 1,2-epoxide, 4-(triethylsilyl)butane 1,2-epoxide, 3-(perfluoromethyl)-1,2-epoxypropane, 3-(perfluoroethyl)-1,2-epoxypropane, 3-(perfluorobutyl)-1,2-epoxypropane, 3-(perfluorohexyl)-1,2-epoxypropane, 4-(2,3-epoxypropyl)morpholine, 1-(oxiran-2-ylmethyl)pyrrolidin-2-one and mixtures thereof, and where the epoxide bearing alkoxysilyl groups is selected from 3-glycidyloxypropyltrimethoxysilane, 3-glycidyloxypropyltrietho xysilane, 3-glycidyloxypropyltripropoxysilane, 3-glycidyloxyp ropyltriisopropoxysilane, bis(3-glycidyloxypropyl)dimethoxysi lane, bis(3-glycidyloxypropyl)diethoxysilane, 3-glycidyloxyhe xyltrimethoxysilane, 3-glycidyloxyhexyltriethoxysilane, 3-gly cidyloxypropylmethyldimethoxysilane, 3-glycidyloxypropylethyl diethoxysilane and mixtures thereof.

13. Process according to any of Claims 9 to 12, **characterized in that** the acetoacetate esters and diketenes are selected from diketene, methyl acetoacetate, ethyl acetoacetate, allyl acetoacetate, propyl acetoacetate, isopropyl acetoacetate, butyl acetoacetate, isobutyl acetoacetate, tert-butyl acetoacetate, pentyl acetoacetate, hexyl acetoacetate, heptyl acetoacetate, 2-methoxyethyl acetoacetate, 2-(methacryloyloxy)ethyl acetoacetate, benzyl acetoacetate and mixtures thereof.

14. Use of alkoxylation products according to any of Claims 1 to 8 for production of adhesives and sealants, as reactive diluent in adhesive sealant formulations, for coating and modification of surfaces and fibres, as reactive crosslinker, as adhesion promoter, as primer or as binder.

15. Use of acetoacetate esters and diketene for reducing the viscosity of storage-stable alkoxylation products bearing alkoxysilyl groups.

## Revendications

1. Produits d'alcoxylation, contenant au moins un groupe alcoxysilyle non terminal, constitué par des monomères d'au moins un oxyde d'alkylène et d'au moins un époxyde portant des groupes alcoxysilyle, **caractérisés en ce qu'**au moins 30% de tous les groupes OH libres en l'extrémité de chaîne du produit d'alcoxylation sont transformés en groupes acétoacétate.

2. Produits d'alcoxylation selon la revendication 1, **caractérisés en ce qu'**au moins 30%, de préférence au moins 40%, de manière particulièrement préférée au moins 50% et en particulier de préférence au moins 60% de tous les groupes OH libres en l'extrémité de chaîne des produits d'alcoxylation sont transformés en groupes acétoacétate.

3. Produits d'alcoxylation selon l'une quelconque des revendications 1 ou 2, **caractérisés en ce qu'**ils présentent une viscosité ≤ 25 Pa.s, de préférence ≤ 15 Pa.s, en particulier de préférence ≤ 10 Pa.s.

4. Produits d'alcoxylation selon l'une quelconque des revendications 1 à 3, les produits d'alcoxylation correspondant à la formule (I), 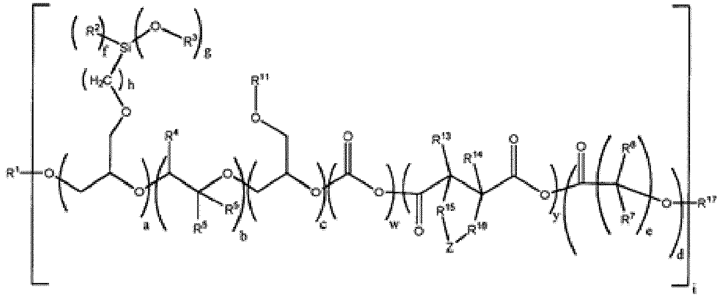 Formule (I)
dans laquelle
a = 0 à 100,
b = 0 à 1000,
c = 0 à 200,
d = 0 à 200,
w = 0 à 200,
y = 0 à 500,
e = 1 à 10,
f = 0 à 2
g = 1 à 3
à condition que g + f = 3
h = 0 à 10,
i = vaut 1 à 10.
à condition que les groupes présentant les indices a, b, c, d, w et y soient permutables librement sur la chaîne de la molécule, les groupes présentant les indices w et y ne pouvant pas se succéder eux-mêmes ou à chaque fois à l'autre groupe, et à condition que les différentes unités monomères, tant des fragments présentant les indices a, b, c, d, w et y ainsi que de la chaîne polyoxyalkylène éventuellement présente du substituant R¹ puissent présenter une structure séquencée les uns avec les autres, les différents blocs pouvant également être présents plusieurs fois et pouvant être statistiquement répartis les uns avec les autres, ou se trouvent dans une répartition statistique et sont en outre à disposer de manière librement permutable les uns avec les autres, dans le sens d'un ordre quelconque, avec comme limitation que les groupes présentant les indices w et y ne peuvent pas se succéder eux-mêmes ou à chaque fois à l'autre groupe et
R¹ = indépendamment, R¹⁷ ou un radical hydrocarboné organique saturé ou insaturé, linéaire ou ramifié, qui peut contenir O, S et/ou N comme hétéroatomes, de préférence le radical hydrocarboné contient 1 à 400 atomes de carbone, de préférence 2, 3 ou 4 à 200 atomes de carbone,
R² = indépendamment, un groupe alkyle comprenant 1 à 8 atomes de carbone,
R³ = indépendamment, un groupe alkyle comprenant 1 à 8 atomes de carbone,
R⁴ = indépendamment, un radical hydrogène, un groupe alkyle comprenant 1 à 20 atomes de carbone, un groupe aryle ou un groupe alkaryle,
R⁵ = indépendamment, un radical hydrogène ou un groupe alkyle comprenant 1 à 8 atomes de carbone, ou R⁴ et un des radicaux R⁵ peuvent former, ensemble, un cycle qui comprend les atomes auxquels R⁴ et R⁵ sont liés, de préférence, ce cycle contient 5 à 8 atomes de carbone,
R⁶ et R⁷ = indépendamment, un radical hydrogène, un groupe alkyle comprenant 1 à 20 atomes de carbone, un groupe aryle ou un groupe alkaryle ou un groupe alcoxy,
R¹¹ = indépendamment, un radical hydrocarboné saturé ou insaturé, aliphatique ou aromatique, comprenant 2 à 30 atomes de carbone, qui est éventuellement substitué,
R¹³, R¹⁴ = indépendamment, hydrogène ou un radical organique, de préférence des groupes alkyle, alcényle, alkylidène, alcoxy, aryle ou aralkyle, ou R¹³ et/ou R¹⁴ peuvent éventuellement également ne pas être présents, où, lorsque R¹³ et R¹⁴ ne sont pas présents, il existe une double liaison C=C au lieu des radicaux R¹³ et R¹⁴, le fragment Z formant un pont peut être présent ou non et si le fragment Z formant un pont n'est pas présent, alors
R¹⁵ et R¹⁶ = indépendamment, hydrogène ou un radical organique, où, pour le cas où un des radicaux R¹³ ou R¹⁴ n'est pas présent, le radical à chaque fois géminal est un radical alkylidène, si le fragment Z formant un pont est présent, alors
R¹⁵ et R¹⁶ = représentent des radicaux hydrocarbonés qui forment un pont cycloaliphatique ou aromatique via le fragment Z, Z représentant un radical alkylène ou alcénylène divalent, qui peut être substitué davantage,
R¹⁷ = indépendamment, hydrogène ou un radical de formule (II) 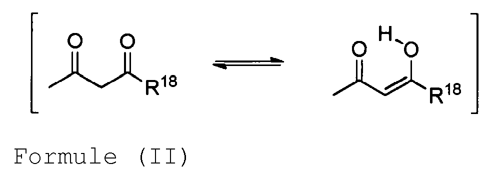 dans laquelle
R¹⁸ = indépendamment, un groupe alkyle linéaire ou ramifié, saturé ou insaturé, le cas échéant substitué davantage, comprenant 1 à 30 atomes de carbone, un groupe aryle ou alkaryle, de préférence méthyle, éthyle, phényle, de manière particulièrement préférée méthyle ou éthyle,
et à condition qu'au moins 30% des radicaux R¹⁷ correspondent à la formule (II).

5. Produit d'alcoxylation selon la revendication 4, dans lequel
a = 1 à 50
b = 1 à 500
c = 0 à 50
d = 0 à 50
w = 0 à 50
y = 0 à 100,
e = 1 à 10,
f = 0 à 2
g = 1 à 3
à condition que g + f = 3
h = 1 à 6 et
i = 1 à 5.

6. Produit d'alcoxylation selon l'une quelconque des revendications 4 ou 5, avec
a = 1 à 20,
b = 10 à 500,
c = 0 à 20,
d = 0 à 20,
w = 0 à 20,
y = 0 à 20,
e = 1 à 10,
f = 0 à 2
g = 1 à 3
à condition que g + f = 3
h = 1, 2 ou 3
i = 1, 2, ou 3 et
R¹ = indépendamment, R¹⁷ ou un radical alkyle comprenant 2 à 12 atomes de carbone,
R² = indépendamment, un groupe méthyle, éthyle, propyle ou isopropyle,
R³ = indépendamment, un groupe méthyle, éthyle, propyle ou isopropyle,
R⁴ = indépendamment, hydrogène ou un groupe méthyle, éthyle, octyle, décyle, dodécyle, phényle ou benzyle,
R⁵ = indépendamment, hydrogène ou un groupe méthyle ou éthyle,
R¹¹ = indépendamment, une chaîne alkyle éventuellement substituée, comprenant 4 à 20 atomes de carbone,
R¹⁷ = indépendamment, hydrogène ou un radical de formule (II) 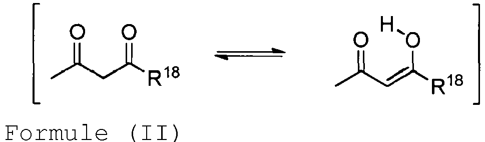
dans laquelle
R¹⁸ = méthyle, éthyle, ou phényle,
et à condition qu'au moins 30% des radicaux R¹⁷ correspondent à la formule (II).

7. Produits d'alcoxylation, contenant au moins un groupe alcoxysilyle non terminal, et au moins 30% de tous les groupes OH libres en l'extrémité de chaîne du produit d'alcoxylation étant transformés en groupes acétoacétate, pouvant être obtenus par transformation d'au moins un oxyde d'alkylène et d'au moins un époxyde portant des groupes alcoxysilyle et éventuellement d'autres monomères et par transformation consécutive du produit obtenu avec des esters d'acétoacétate et/ou un dicétène.

8. Produit d'alcoxylation selon la revendication 7, au moins de l'oxyde d'éthylène et/ou de l'oxyde de propylène étant utilisé(s) comme oxyde d'alkylène et au moins un n-glycidyloxyalkyltrialcoxysilane étant utilisé comme époxyde portant des groupes alcoxysilyle.

9. Procédé pour la préparation de produits d'alcoxylation selon l'une des revendications 1 à 6, au moins un oxyde d'alkylène étant transformé avec au moins un époxyde portant des groupes alcoxysilyle et éventuellement d'autres monomères et le produit ainsi obtenu étant transformé avec des esters d'acétoacétate et/ou des dicétènes.

10. Procédé selon la revendication 9, comprenant les étapes de
(1) transformation d'au moins un initiateur, choisi dans le groupe des alcools, des polyétherols ou des phénols, avec au moins un oxyde d'alkylène et au moins un époxyde portant des groupes alcoxysilyle et
(2) transformation du produit d'alcoxylation terminé par OH de l'étape (1) avec au moins un ester d'acétoacétate ou un dicétène,
où il s'agit, pour les initiateurs, de composés à fonctionnalité OH et, pour les oxydes d'alkylène et les réactifs, de ceux définis comme préférés ci-dessus.

11. Procédé selon l'une quelconque des revendications 9 ou 10, l'initiateur R¹-(OH) étant choisi parmi le méthanol, l'éthanol, le propanol, l'isopropanol, le butanol, l'iso-butanol, le tert-butanol, le mono-isobutyrate de 2,2,4-triméthyl-1,3-pentanediol, l'octanol, le 2-éthylhexanol, le 2-propylheptanol, l'alcool allylique, le décanol, le dodécanol, un alcool gras en C₁₂/C₁₄, le phénol, tous les isomères constitutifs du crésol, l'alcool benzylique, l'alcool stéarylique, l'éthylèneglycol, le propylèneglycol, le diéthylèneglycol/triéthylèneglycol, le 1,2-propylèneglycol, le dipropylèneglycol/tripropylèneglycol, le néopentylglycol, le 1,4-butanediol, le 1,2-hexanediol et le 1,6-hexanediol, le triméthylolpropanemonoéther ou le glycérolmonoéther, les poly(oxydes d'éthylène), les poly(oxydes de propylène), les polyesters, les polycarbonates, les polycarbonatepolyols, les polyesterpolyols, les polyétheresters, les polyétherols, les polyéthercarbonates, les polyamides, les polyuréthanes et les alcoxylates à base de sucre et leurs mélanges.

12. Procédé selon l'une quelconque des revendications 9 à 11, l'oxyde d'alkylène étant choisi parmi l'oxyde d'éthylène, le 1,2-époxypropane, le 1,2-époxy-2-méthylpropane, l'épichlorhydrine, le 2,3-époxy-1-propanol, le 1,2-époxybutane, le 2,3-époxybutane, le 2,3-diméthyl-2,3-époxybutane, le 1,2-époxypentane, le 1,2-époxy-3-méthylpentane, le 1,2-époxyhexane, le 1,2-époxycyclohexane, le 1,2-époxyheptane, le 1,2-époxyoctane, le 1,2-époxynonane, le 1,2-époxydécane, le 1,2-époxyundécane, le 1,2-époxydodécane, l'oxyde de styrène, le 1,2-époxycyclopentane, le 1,2-époxycyclohexane, l'oxyde de vinylcyclohexène, le (2,3-époxypropyl)benzène, le vinyloxirane, le 3-phénoxy-1,2-époxypropane, le 2,3-époxyméthyléther, le 2,3-époxyéthyléther, le 2,3-époxyisopropyléther, le stéarate de 3,4-époxybutyle, l'acétate de 4,5-époxypentyle, le méthacrylate de 2,3-époxypropane, l'acrylate de 2,3-époxypropane, le butyrate de glycidyle, le glycidate de méthyle, le 2,3-époxybutanoate d'éthyle, le 1,2-époxyde de 4-(triméthylsilyl)butane, le 1,2-époxyde de 4-(triéthylsilyl)butane, le 3-(perfluorométhyl)-1,2-époxypropane, le 3-(perfluoroéthyl)-1,2-époxypropane, le 3-(perfluorobutyl)-1,2-époxypropane, le 3-(perfluorohexyl)-1,2-époxypropane, la 4-(2,3-époxypropyl)morpholine, la 1-(oxiran-2-ylméthyl)pyrrolidin-2-one et leurs mélanges et l'époxyde portant des groupes alcoxysilyle étant choisi parmi le 3-glycidyloxypropyltriméthoxysilane, le 3-glycidyloxypropyltriéthoxysilane, le 3-glycidyloxypropyltripropoxysilane, le 3-glycidyloxypropyltriisopropoxysilane, le bis(3-glycidyloxypropyl)diméthoxysilane, le bis(3-glycidyloxypropyl)diéthoxysilane, le 3-glycidyloxyhexyltriméthoxysilane, le 3-glycidyloxyhexyltriéthoxysilane, le 3-glycidyloxypropylméthyldiméthoxysilane, le 3-glycidyloxypropyléthyldiéthoxysilane et leurs mélanges.

13. Procédé selon l'une quelconque des revendications 9 à 12, **caractérisé en ce que** les esters d'acétoacétate et les dicétènes sont choisis parmi le dicétène, l'acétoacétate de méthyle, l'acétoacétate d'éthyle, l'acétoacétate d'allyle, l'acétoacétate de propyle, l'acétoacétate d'isopropyle, l'acétoacétate de butyle, l'acétoacétate d'isobutyle, l'acétoacétate de tert-butyle, l'acétoacétate de pentyle, l'acétoacétate d'hexyle, l'acétoacétate d'heptyle, l'acétoacétate de 2-méthoxyéthyle, l'acétoacétate de 2-(méthacryloyloxy)éthyle, l'acétoacétate de benzyle et leurs mélanges.

14. Utilisation de produits d'alcoxylation selon l'une quelconque des revendications 1 à 8 pour la préparation d'adhésifs et de substances d'étanchéité, comme diluants réactifs dans des formulations d'adhésifs et de substances d'étanchéité, pour le revêtement et la modification de surfaces et de fibres, comme réticulants réactifs, comme promoteurs d'adhérence, comme apprêts ou comme liants.

15. Utilisation d'esters d'acétoacétate et de dicétène pour la diminution de la viscosité de produits alcoxylation portant des groupes alcoxysilyle stables à l'entreposage.
